# EUROPEAN PATENT SPECIFICATION

(11) **EP 3 056 862 B1**
(45) Date of publication and mention of the grant of the patent: **06.01.2021**
(21) Application number: 14862105.5
(22) Date of filing: 11.11.2014
(51) Int. Cl.: G01C 21/34, G06Q 50/10, G08G 1/00, G01C 21/36, B60L 53/65, B60L 53/66, B60L 58/12, B60L 53/68

(54) **ROUTE SEARCHING DEVICE FOR RECHARGEABLE VEHICLE, ROUTE SEARCHING METHOD FOR RECHARGEABLE VEHICLE, AND PROGRAM**
ROUTENSUCHVORRICHTUNG FÜR EIN WIEDERAUFLADBARES FAHRZEUG, ROUTENSUCHVERFAHREN FÜR EIN WIEDERAUFLADBARES FAHRZEUG UND PROGRAMM
DISPOSITIF DE RECHERCHE D'ITINERAIRE POUR VEHICULE RECHARGEABLE, PROCEDE DE RECHERCHE D'ITINERAIRE POUR VEHICULE RECHARGEABLE ET PROGRAMME

(30) Priority: 13.11.2013 JP 2013235125
(43) Date of publication of application: 17.08.2016
(73) Proprietor: Mitsubishi Heavy Industries, Ltd., Tokyo 108-8215 (JP)
(72) Inventor: KITAJIMA Kazuyoshi, Tokyo 108-8215 (JP); SAITO Takashi, Tokyo 108-8215 (JP)
(74) Representative: Henkel & Partner mbB
(86) International application number: PCT/JP2014/079852
(87) International publication number: WO 2015/072454

(56) References cited:
- WO-A1-2012/004898
- WO-A2-2012/058022
- JP-A- 2012 128 019
- US-A1- 2010 094 496
- US-A1- 2012 089 329

## Description

### Technical Field

The present invention relates to a route searching device for a rechargeable vehicle, a route searching method for a rechargeable vehicle, and a program.

Priority is claimed on Japanese Patent Application No. 2013-235125, filed November 13, 2013.

### Background Art

Recently, a car sharing system in which a plurality of people commonly uses a shared car for car sharing has been widely used. Regarding the car sharing system, a service using a rechargeable vehicle as the shared car has attracted attention. Because the rechargeable vehicle requires a long time for charging, in order to reduce traveling time to a destination, a shared car having a state of charge which allows traveling to the next point is required at a boarding point, or at a transfer point, when traveling is started. In a case where a charging station is used in the middle of traveling, an available charger is required to be ensured as a facility of a charging point.

For example, if a request for a boarding point and a destination is received from a user, vehicles having a state of charge which allows arrival in a charging station closest to the destination on a route through the boarding point and the destination from the current position of a vehicle being moving are extracted. Among the extracted vehicles, a vehicle closest to the boarding point of the user is notified of a vehicle dispatch instruction (for example, see PTL 1).

WO 2012 058022 A2 discloses a battery electric vehicle routing apparatus and methods for routing to a charging station, in which a vehicle navigation system obtains current utilization and compatibility information from a live database and uses this to selectively route the vehicle to a charging station having available chargers compatible with the vehicle.

US 2010 094496 A1 discloses a system and method for managing energy usage in an electric vehicle. A charge level of at least one battery of the electric vehicle is received. A current location of the electric vehicle is received. A theoretical maximum range of the electric vehicle is determined based on the current location of the electric vehicle and the charge level of the at least one battery of the electric vehicle. An energy plan for the electric vehicle is generated.

US 2012 089329 A1 discloses a navigation system for an electric vehicle and a navigation method for the same. The navigation system searches for the location of a charging station and paths where traveling of an electric vehicle is possible, provides the charging station location information and information of the searched paths to a navigation terminal, thereby improving usability and traveling stability of an electric vehicle, resulting in increased road efficiency.

### Citation List

### Patent Literature

[PTL 1] Japanese Unexamined Patent Application, First Publication No. 2012-73979

### Summary of Invention

### Technical Problem

In a car sharing system, the number of shared cars which have to be ensured in a facility providing the shared car and are being used, the state of charge of each of the shared cars, or availability of a charger at a charging station is ever-changing in accordance with a use state thereof.

Thus, in a case where a reservation is received without confirmation of whether or not a shared car which can travel to a destination designated by a user is ensured, a situation in which there is no usable shared car even when the user travels to the boarding point or the transfer point, or a situation in which there is no usable charger even when the user travels to the facility of a charging point may occur.

According to the present invention the above object is achieved by means of a route searching device according to claim 1, the route searching method according to claim 11 and the program according to claim 12. The dependent claims are directed to different advantageous aspects of the invention.

The present invention provides a route searching device for a rechargeable vehicle, a route searching method for a rechargeable vehicle, and a program which can provide a facility which is usable on a route to a destination, in accordance with a use state of a facility in a car sharing system in which a plurality of people commonly shares a rechargeable vehicle.

### Advantageous Effects of Invention

The route searching device for a rechargeable vehicle, the route searching method for a rechargeable vehicle, and the program can provide a facility usable on a route to a destination, in accordance with a use state of facilities, in a car sharing system in which a plurality of people shares a rechargeable vehicle.

### Brief Description of Drawings

FIG. 1 is a schematic diagram illustrating an example of a rechargeable vehicle management system including a route searching device for a rechargeable vehicle according to the present invention.
FIG. 2 is a block diagram illustrating a configuration example of a route searching device for a rechargeable vehicle (central management server) according to the present invention.
FIG. 3 is a diagram illustrating an example of a dynamic table of an EV car pool according to the embodiment of the present invention.
FIG. 4 is a diagram illustrating an example of a dynamic table of a charging station according to the present invention.
FIG. 5 is a diagram illustrating an example of a dynamic table of reservation information according to the present invention.
FIG. 6 is a diagram illustrating an example of a route obtained by searching of the route searching device for a rechargeable vehicle (central management server) according to the present invention.
FIG. 7 is a flowchart illustrating an example of a route searching method for a rechargeable vehicle according to an embodiment not falling within the scope of the present invention.
FIG. 8 is a flowchart illustrating an example of a movement plan creation process included in the route searching method for a rechargeable vehicle, which is illustrated in FIG. 7.
FIG. 9 is a flowchart illustrating an example of a reservation process included in the route searching method for a rechargeable vehicle, which is illustrated in FIG. 7.
FIG. 10 is a flowchart illustrating an example of a reservation monitoring process included in the route searching method for a rechargeable vehicle, which is illustrated in FIG. 7.
FIG. 11 is a diagram illustrating an example of a dynamic table at 14:00.
FIG. 12 is a diagram illustrating an example of a dynamic table at 14:00.
FIG. 13 is a diagram illustrating an example of a dynamic table at 14:00.
FIG. 14 is a diagram illustrating an example of a dynamic table at 15:00.
FIG. 15 is a diagram illustrating an example of a dynamic table at 15:00.
FIG. 16 is a diagram illustrating an example of a dynamic table at 15:00.

### Description of Embodiments

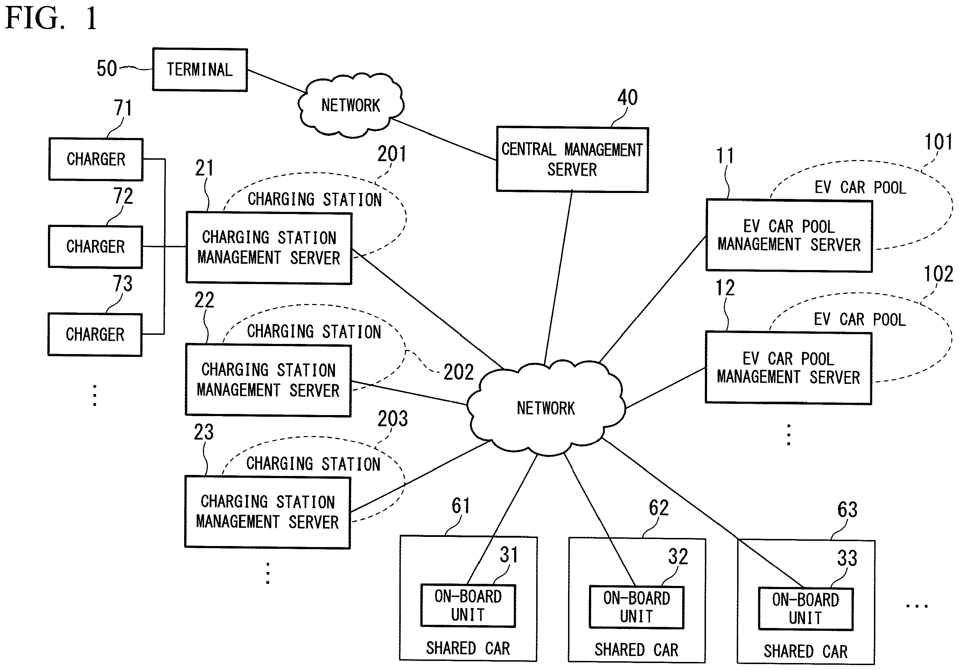

Hereinafter, an example of a rechargeable vehicle management system including a route searching device for a rechargeable vehicle according to the present invention will be described. FIG. 1 is a schematic diagram illustrating an example of a rechargeable vehicle management system including a route searching device for a rechargeable vehicle according to the present invention.

As illustrated in FIG. 1, the rechargeable vehicle management system includes a plurality of EV car pool management servers 11, 12, ..., a plurality of charging station management servers 21, 22, 23, ..., a plurality of on-board units 31, 32, 33, ..., and a central management server 40 which functions as a route searching device for a rechargeable vehicle. The above-described servers and on-board units are connected to each other through a network. The plurality of on-board units 31, 32, 33, ... is respectively mounted in a plurality of shared cars 61, 62, 63, .... Pieces of unique identification information (vehicle ID) which are determined in advance are assigned to the on-board units 31, 32, 33, ...,or the shared cars 61, 62, 63,....

Each of the plurality of EV car pool management servers 11, 12, ... is a server that manages facility information regarding a use state of each of EV car pools 101, 102, ... which are respectively correlated with the EV car pool management servers 11, 12,.... The EV car pool corresponds to a facility (vehicle supply facility) in which a shared car for car sharing parks, and a shared car is supplied to a user. A charger which supplies power to a battery of a parking shared car or to a battery attachable to a shared car may be provided in the EV car pool.

The plurality of EV car pool management servers 11, 12, ... transmits information regarding a use state in an EV car pool to the central management server 40 through the network. For example, each of the plurality of EV car pool management servers 11, 12, ... transmits information obtained by correlating a vehicle ID with information indicating a battery remaining quantity, a reservation state, and a use state of a shared car parking in each of the EV car pools 101, 102, ... to the central management server 40. Each of the plurality of EV car pool management servers 11, 12, ... acquires information indicating a battery remaining quantity, from each of the on-board units 31, 32, 33, ... of a parking shared car. Each of the plurality of EV car pool management servers 11, 12, ... may receive information indicating a reservation state or a use state, from a predetermined input unit.

The charging station management server 21 is a server that manages facility information regarding a use state of a charging station 201 in which a plurality of chargers 71, 72, 73, ... is installed. The charging station 201 corresponds to a facility (charging facility) in which power is supplied to a battery of a shared car for car sharing. The plurality of chargers 71, 72, 73, ... is installed in the charging station 201. A parking space for parking a shared car in the process of charging is prepared at each of the chargers 71, 72, 73, .... Each of the plurality of chargers 71, 72, 73, ... is a charger that supplies power to a battery of a parking shared car or to a battery attachable to a shared car.

Other charging station management servers 22, 23, ... are servers that manage facility information regarding use states of the charging stations 202, 203, ..., similarly to the charging station management server 21. Detailed descriptions thereof will not be repeated.

Each of the plurality of charging station management servers 21, 22, 23, ... transmits information regarding a use state of a charging station to the central management server 40 through the network. For example, each of the plurality of charging station management servers 21, 22, 23, ... transmits information obtained by correlating a charger ID with information indicating a reservation state or a use state of a charger installed in each of the charging stations 201,202,203, ... to the central management server 40. Each of the plurality of charging station management servers 21, 22, 23, ... may receive information indicating a reservation state or a use state, from a predetermined input unit. The charger ID corresponds to unique identification information which is assigned to each charger installed in a charging station, and is determined in advance.

The plurality of on-board units 31, 32, 33, ..., and the plurality of shared cars 61, 62, 63, ... in which each of the on-board units is mounted are respectively linked to each other by a vehicle ID. In the embodiment, an example of using an electric car (EV) will be described as an example of a rechargeable vehicle. The embodiment is not limited thereto. The rechargeable vehicle includes a hybrid vehicle.

Each of the plurality of on-board units 31, 32, 33, ... transmits facility information regarding a use state of a shared car in which an on-board unit is mounted to the central management server 40 through the network. For example, each of the plurality of on-board units 31, 32, 33, ... acquires information indicating the battery remaining quantity of a shared car, information indicating the current position of the on-board unit which is acquired by using a satellite positioning system, or information indicating a reservation state or a use state of the shared car. Each of the plurality of on-board units 31, 32, 33, ... transmits information obtained by correlating a vehicle ID with the battery remaining quantity, the current position, the reservation state, or the use state of a shared car to the central management server 40.

The central management server 40 is connected to the EV car pool management servers 11, 12, ..., the charging station management servers 21, 22, 23, ..., and a terminal 50 through the network.

The central management server 40 acquires facility information regarding a use state of a supply facility through the network. The supply facility includes at least one of EV car pools at which shared cars are provided, and charging stations at which power is supplied to a battery of a shared car. The central management server 40 searches a route to a destination, and creates a movement plan based on map information and the acquired facility information. The searched route includes a supply facility (EV car pool or charging station) to be used. The movement plan includes the route obtained by searching, and supply details which are received by a supply facility on the route. The supply details received by the supply facility on the route include, for example, information indicating an EV car pool or a charging station used on the route, information indicating a shared car or a charger to be used, a use start time point, a use end time point, information indicating a fare of the EV car pool or the charging station on the route, or information indicating a waiting time for the EV car pool or the charging station used on the route. Details thereof will be described later.

The terminal 50 is a terminal of a user, which is registered in advance in the rechargeable vehicle management system according to the embodiment. The terminal 50 is a portable phone terminal, a smart phone, a tablet terminal, and the like, for example. The terminal 50 includes a touch panel functioning as an input unit and an output unit.

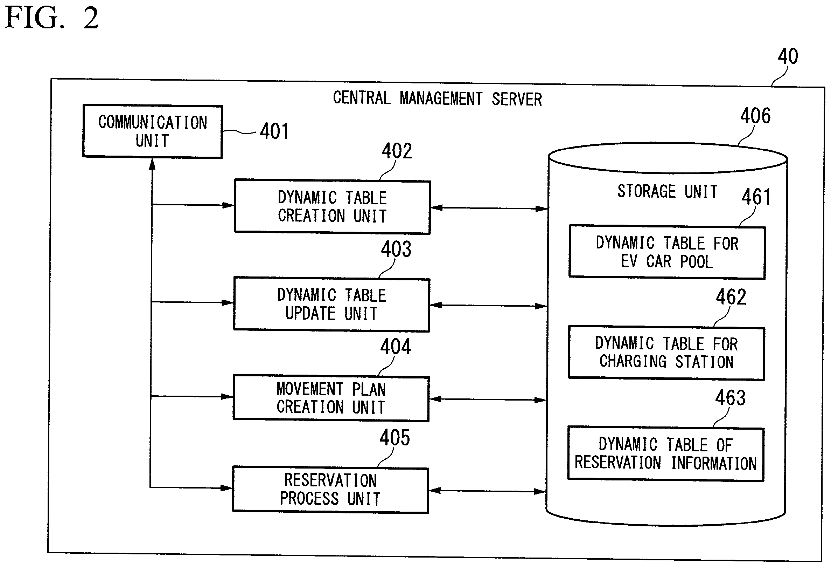

Next, a configuration example of the central management server 40 according to the embodiment will be described with reference to FIG. 2. FIG. 2 is a block diagram illustrating a configuration example of the central management server 40 according to the invention.

As illustrated in FIG. 2, the central management server 40 includes a communication unit 401, a dynamic table creation unit 402, a dynamic table update unit 403, a movement plan creation unit 404, a reservation process unit 405, and a storage unit 406.

The communication unit 401 performs transmission and reception of information through the network. The central management server 40 may have a configuration in which an operation unit or an input interface for acquiring information through a connector is included instead of the communication unit 401.

The dynamic table creation unit 402 writes facility information regarding a use state of an EV car pool at which a shared car is provided, in a dynamic table 461 for an EV car pool in the storage unit 406, based on pieces of information received from the plurality of EV car pool management servers 11, 12, ..., the plurality of charging station management servers 21, 22, 23, ..., or the plurality of on-board units 31, 32, 33, ..., thereby creating the dynamic table 461 for an EV car pool.

The dynamic table creation unit 402 writes facility information regarding a use state of a charging station at which power is supplied to a battery of a shared car, in a dynamic table 462 for a charging station in the storage unit 406, based on the pieces of information received from the plurality of EV car pool management servers 11, 12, ..., the plurality of charging station management servers 21, 22, 23, ..., or the plurality of on-board units 31, 32, 33, ..., thereby creating the dynamic table 462 for a charging station.

The dynamic table update unit 403 updates facility information of the dynamic table 461 for an EV car pool, based on an input state of charge of a shared car. The dynamic table update unit 403 updates facility information of the dynamic table 461 for an EV car pool, or facility information of the dynamic table 462 for a charging station, based on details of a reserved movement plan, in a case where the dynamic table 463 of the reservation information is updated.

The movement plan creation unit 404 searches a route to a destination, which includes an EV car pool or a charging station to be used, with reference to the storage unit 406, based on the facility information and the map information. The movement plan creation unit 404 creates a movement plan which includes the route obtained by searching, and supply details received by an EV car pool or a charging station on the searched route.

The movement plan creation unit 404 creates a movement plan which includes an EV car pool at which a shared car having a state of charge which allows traveling to the next EV car pool or the next charging station on the route is ensured, and includes a charging station at which an available charger which is usable by a shared car when the shared car arrives is included, as a supply facility used on the route. Specifically, the movement plan creation unit 404 calculates a consumed power quantity in a case where traveling to the next EV car pool or the next charging station is performed. The movement plan creation unit 404 determines whether or not a shared car having a state of charge which allows power being equal to or greater than the calculated consumed power to be provided is ensured.

The movement plan creation unit 404 creates a movement plan which includes an EV car pool at which the shared car which has traveled is replaced with another shared car, or includes a charging station at which power is supplied to the shared car which has traveled, as the supply facility used on the route.

If a departure point and a destination are designated, the movement plan creation unit 404 selects the optimal movement plan which satisfies a priority condition, among movement plans, for example, based on the priority conditions (shortest time, minimum distance, minimum cost, minimum number of via-places, and the like) which are determined by a user. For example, in a case where it is determined that traveling time has a first priority, as the priority condition, the movement plan creation unit 404 selects a movement plan in which the traveling time is shortest, as the optimal movement plan. For example, in a case where it is determined that a fare has a first priority, as the priority condition, the movement plan creation unit 404 selects a movement plan in which a fare is cheapest, as the optimal movement plan.

The movement plan creation unit 404 may extract optimal routes of a predetermined number or less from routes obtained by searching, based on the priority condition. The movement plan creation unit 404 may create a movement plan based on the extracted routes.

Specifically, in a case where the state of charge of a battery does not allow arrival to an EV car pool at a disembarking point, if a charging point is relayed, a waiting time for charging time occurs. The traveling time is long in a movement plan in which charging is performed at a charging station on the route. However, a fare is cheap in comparison to a case where replacement with another shared car having a large state of charge is performed at an EV car pool on the route. In a case where it is determined that traveling time has a first priority, as the priority condition, the movement plan creation unit 404 selects a route on which replacement with another shared car having a large state of charge is performed at an EV car pool, as the optimal movement plan. For example, in a case where it is determined that a fare has a first priority, as the priority condition, the movement plan creation unit 404 selects a route on which charging is performed at a charging station, as the optimal movement plan.

In a case where a shared car which can travel on a route from a departure point to a destination is not provided at an EV car pool in a boarding point and a transfer point, the movement plan creation unit 404 sets an alternative destination different from the destination, and searches a route on which traveling can be performed with a state of charge of a battery of a shared car in the boarding point. The movement plan creation unit 404 creates a movement plan in which traveling toward the alternative destination obtained by searching is performed.

In a case where details of a movement plan created by the movement plan creation unit 404 are reserved through the terminal 50, the reservation process unit 405 receives a reservation of a shared car based on reservation instruction information, which is received from the terminal 50. The reservation process unit 405 writes the details of the received reservation in the dynamic table 463 of the reservation information in the storage unit 406.

The storage unit 406 stores various types of information required for processing of the central management server 40. The storage unit 406 includes, for example, a dynamic table 461 for an EV car pool, a dynamic table 462 for a charging station, a dynamic table 463 of reservation information, map information, and movement condition information. The map information is information obtained by correlating a position of an EV car pool or a charging station with a map indicating the general geography. The movement condition information is information for calculating moving time, a moving distance, and consumed power in a case where moving on a route obtained by searching is performed.

The storage unit 406 stores information for calculating a fare of a shared car or a charging station, and information for calculating a waiting time for the shared car or the charging station, as the facility information. The information for calculating a fare includes information indicating a fare determined in accordance with a charged power quantity, and a fare determined in accordance with using time of a shared car or a charger. The information for calculating a waiting time includes the charging time determined in accordance with the type or a battery of a charger. The information indicating a reservation state or a use state in the dynamic table may be referred to as information for calculating a waiting time.

The storage unit 406 may be configured on the outside of the central management server 40. In this case, the central management server 40 acquires information stored in the above-described storage unit 406, from an external storage unit.

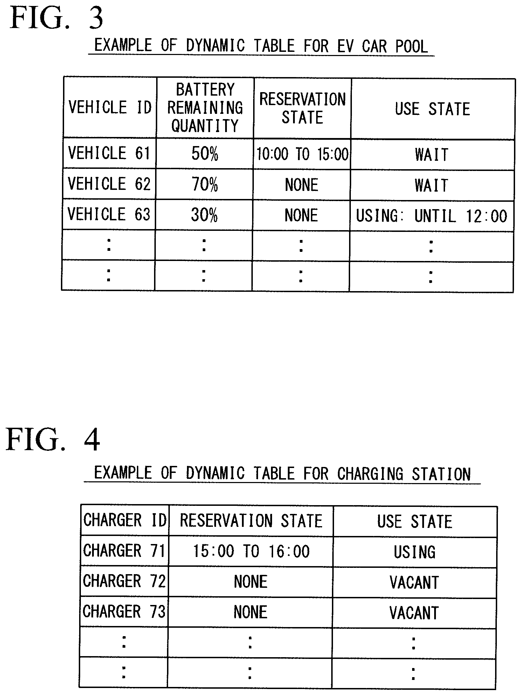

Next, an example of the dynamic table 461 for an EV car pool will be described with reference to FIG. 3. FIG. 3 is a diagram illustrating an example of the dynamic table 461 for an EV car pool. The dynamic table 461 for an EV car pool is a dynamic table created for each of the plurality of EV car pools 101, 102, .... The dynamic table 461 for an EV car pool illustrated in FIG. 3 is a table which stores facility information relating to the use state of the EV car pool 101.

As illustrated in FIG. 3, the dynamic table 461 for an EV car pool is a table in which pieces of information which indicate a vehicle ID, a battery remaining quantity, a reservation state, and a use state are correlated with each other.

The information indicating a vehicle ID is information indicating a vehicle ID of a shared car parking in the EV car pool 101.

The information indicating a battery remaining quantity is information indicating a remaining capacity of the battery of each shared car.

The information indicating a reservation state is information indicating a reservation state of each shared car. The information indicating a reservation state is information indicating a period when a shared car is rented. For example, the information indicating a reservation state includes information indicating a time point when a shared car is rented in a boarding point, and a time point when the shared car is returned in a disembarking point.

The information indicating a use state is information indicating a use state of each shared car. The information indicating a use state is information indicating that a shared car is in a state of being used (that is, a state where the shared car is not in an EV car pool), or in a state of not being used (that is, a state where the shared car stands by in the EV car pool) at the current time point.

Next, an example of the dynamic table 462 for a charging station will be described with reference to FIG. 4. FIG. 4 is a diagram illustrating an example of the dynamic table 462 for a charging station. The dynamic table 462 for a charging station is a dynamic table created for each of the plurality of charging stations 201, 202, 203, .... The dynamic table 462 for a charging station illustrated in FIG. 4 is a table which stores facility information relating to the use state of the charging station 201.

As illustrated in FIG. 4, the dynamic table 462 for a charging station is a table in which pieces of information which indicate a charger ID, a reservation state, and a use state are correlated with each other.

The information indicating a charger ID is information indicating a charger ID of a charger installed in the charging station 201.

The information indicating a reservation state is information indicating a reservation state of a charger. The information indicating a reservation state is information indicating a period when a charger is used. For example, the information indicating a use start time point and a use end time point of a charger.

The information indicating a use state is information indicating a use state of each charger. The information indicating a use state is information indicating whether a charger is being used or is not being used.

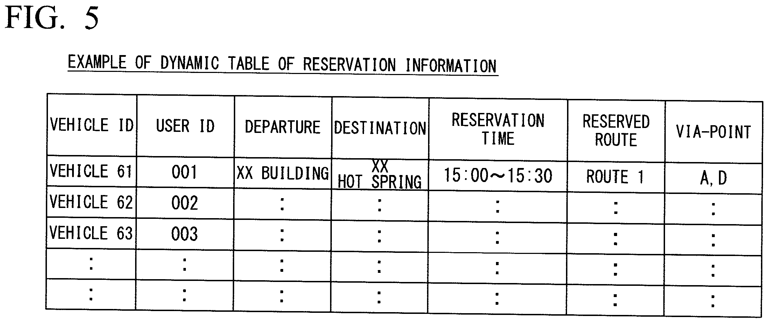

Next, an example of the dynamic table 463 of reservation information will be described with reference to FIG. 5. FIG. 5 is a diagram illustrating an example of the dynamic table 463 of reservation information. The dynamic table 463 of reservation information is a dynamic table created for each reservation, for example, for each user or for each of the plurality of on-board units 31, 32, 33, .... The dynamic table 463 of reservation information illustrated in FIG. 5 is a table which stores reservation information regarding the on-board unit 31.

As illustrated in FIG. 5, the dynamic table 463 of reservation information is a table in which pieces of information which indicate a vehicle ID, a user ID, a departure point, a destination, reservation time, a reserved route, a via-point, and a battery remaining quantity are correlated with each other.

The information indicating a vehicle ID is information indicating a vehicle ID of a shared car which is reserved for a use.

The information indicating a user ID is information indicating a user ID of a user who reserves a use.

The information indicating a departure point and the information indicating a destination are pieces of information indicating a departure point and a destination which are reserved by a user.

The information indicating reservation time is information indicating a period when a shared car is rented. For example, the information indicating reservation time includes information indicating a time point when a shared car is rented in a boarding point, and a time point when the shared car is returned in a disembarking point.

The information indicating a reserved route is information indicating a route included in a movement plan which is reserved by a user.

The information indicating a via-point is information indicating a via-point which is included in a route indicated by the reserved route. The via-point includes a charging station at which power is supplied to the battery of the shared car on the route, or an EV car pool at which another shared car is provided on a route for replacing the shared car.

The information indicating a battery remaining quantity is information indicating remaining capacity of the battery of a shared car which is reserved for a use.

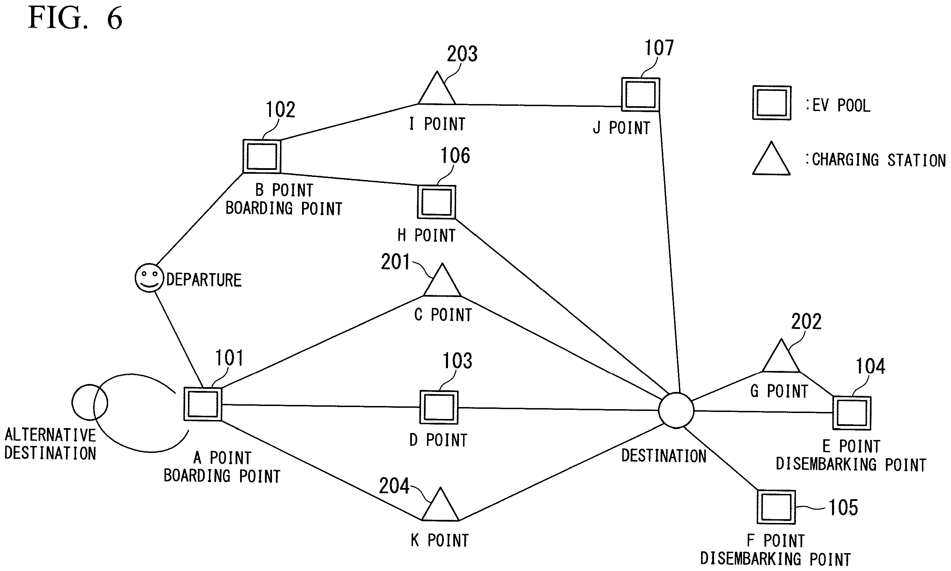

Next, an example of a route obtained by searching of the central management server 40 according to the invention will be described with reference to FIG. 6. FIG. 6 is a diagram illustrating an example of a route obtained by searching of the central management server 40 according to the invention.

In FIG. 6, quadrangular icons indicate EV car pools and triangular icons indicate charging stations.

Routes 1 and 2 are routes from a departure point to a destination without passing an EV car pool or a charging station, and routes for traveling to a disembarking point by using a shared car in a boarding point.
Route 1:
   Departure → EV car pool 101 [A point] → destination → EV car pool 104 [E point]
Route 2:
   Departure → EV car pool 101 [A point] → destination → EV car pool 105 [F point]

Routes 3 to 6 are routes from the departure point to the destination through a charging station, and routes in which the battery of a shared car in the boarding point is charged in a via-point and traveling to the disembarking point is performed.
Route 3:
   Departure → EV car pool 101 [A point] → destination → charging station 202 [G point] → EV car pool 104 [E point]
Route 4:
   Departure → EV car pool 101 [A point] → charging station 201 [C point] → destination → EV car pool 104 [E point]
Route 5:
   Departure → EV car pool 101 [A point] → charging station 201 [C point] → destination → EV car pool 105 [F point]
Route 6:
   Departure → EV car pool 101 [A point] → charging station 201 [C point] → destination → charging station 202 [G point] → EV car pool 104 [E point]

Routes 7 and 8 are routes from the departure point to the destination through an EV car pool, and routes in which a shared car in the boarding point is replaced in a via-point and traveling to the disembarking point is performed.
Route 7:
   Departure → EV car pool 101 [A point] → EV car pool 103 [D point] → destination → EV car pool 104 [E point]
Route 8:
   Departure → EV car pool 101 [A point] → EV car pool 103 [D point] → destination → EV car pool 105 [F point]

Route 9 is a route from the departure point to the destination through an EV car pool and a charging station, and is a route in which a shared car in the boarding point is replaced in a via-point, and the battery of the shared car in the boarding point is charged in a via-point.
Route 9:
Departure → EV car pool 101 [A point] → EV car pool 103 [D point] → destination → charging station 202 [G point] → EV car pool 104 [E point]

Routes 10 and 11 are routes from the departure point to the destination through an EV car pool, and routes in which a shared car in the boarding point is replaced in a via-point, and traveling to the disembarking point is performed.
Route 10:
   Departure → EV car pool 102 [B point] → EV car pool 106 [H point] → destination → EV car pool 104 [E point]
Route 11:
   Departure → EV car pool 102 [B point] → EV car pool 106 [H point] → destination → EV car pool 105 [F point]

Routes 12 to 15 are routes from the departure point to the destination through an EV car pool and a charging station, and routes in which a shared car in the boarding point is replaced in a via-point, the battery of the shared car in the boarding point is charged in a via-point, and traveling to the disembarking point is performed.
Route 12:
   Departure → EV car pool 102 [B point] → EV car pool 106 [H point] →destination → charging station 202 [G point] → EV car pool 104 [E point]
Route 13:
   Departure → EV car pool 102 [B point] → charging station 203 [I point] → EV car pool 107 [J point] → destination → EV car pool 104 [E point]
Route 14:
   Departure → EV car pool 102 [B point] → charging station 203 [I point] → EV car pool 107 [J point] → destination → EV car pool 105[F point]
Route 15:
   Departure → EV car pool 102 [B point] → charging station 203 [I point] → EV car pool 107 [J point] → destination → charging station 202 [G point] → EV car pool 104 [E point]

Routes 16 to 18 are routes from the departure point to the destination through a charging station, and routes in which the battery of the shared car in the boarding point is charged in a via-point, and traveling to the disembarking point is performed.
Route 16:
   Departure → EV car pool 101 [B point] → charging station 204 [K point] → destination → EV car pool 104 [E point]
Route 17:
   Departure →EV car pool 101 [B point] → charging station 204 [K point] → destination → EV car pool 105 [F point]
Route 18:
   Departure → EV car pool 101 [B point] → charging station 204 [K point] → destination → charging station 202 [G point] → EV car pool 104 [E point]

Route 19 is a route in which an alternative destination is set, and traveling with a state of charge of the battery of a shared car in the boarding point is allowed, in a case where a shared car which can travel from the departure point to the destination is not provided in the boarding point.
Route 19:
Departure → EV car pool 101 [A point] → alternative destination → EV car pool 101 [A point]

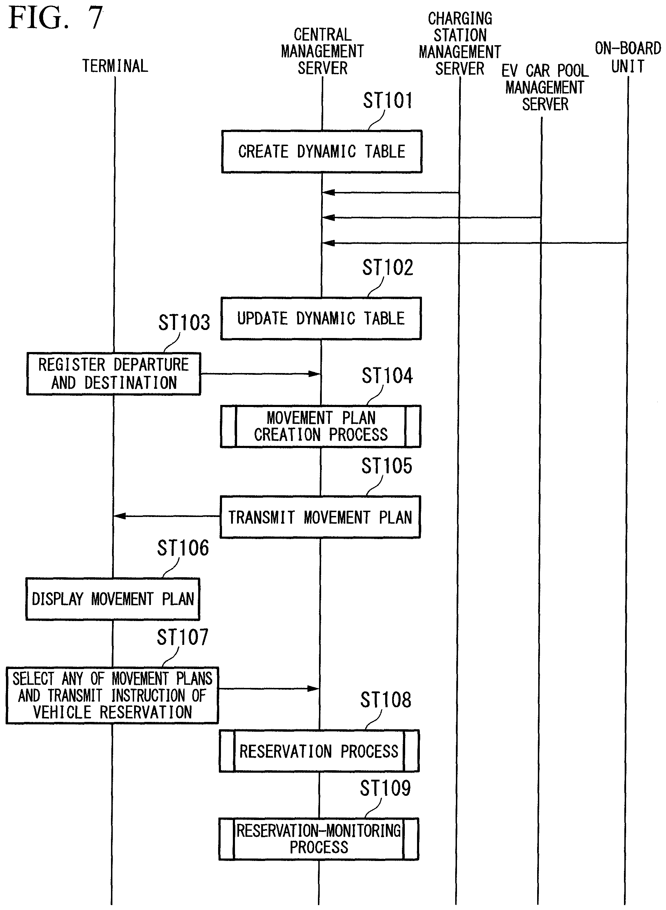

Next, an example of a route searching method for a rechargeable vehicle according to an embodiment not falling within the scope of the invention will be described with reference to FIG. 7. FIG. 7 is a flowchart illustrating an example of the route searching method for a rechargeable vehicle.

### (Step ST101)

The dynamic table creation unit 402 of the central management server 40 creates the dynamic table 461 for an EV car pool and the dynamic table 462 for a charging station, based on pieces of information received from the plurality of EV car pool management servers 11, 12, ..., the plurality of charging station management servers 21, 22, 23, ..., or the plurality of on-board units 31, 32, 33, .... The dynamic table creation unit 402 stores the created dynamic table 461 and the created dynamic table 462 in the storage unit 406. The dynamic table creation unit 402 is not limited thereto. In a case where information for calculating a fare of a shared car or a charging station or information for calculating a waiting time for the shared car or the charging station is received as the facility information, the dynamic table creation unit 402 may create a dynamic table for storing these pieces of information in the storage unit 406.

### (Step ST 102)

The dynamic table update unit 403 of the central management server 40 updates the dynamic table stored in the storage unit 406, at a predetermined timing based on facility information received from the plurality of EV car pool management servers 11, 12, ..., the plurality of charging station management servers 21, 22, 23, ..., or the plurality of on-board units 31, 32, 33, .... That is, the dynamic table update unit 403 updates, for example, the dynamic table 461 for an EV car pool, and the dynamic table 462 for a charging station. The dynamic table update unit 403 updates each of the dynamic tables, for example, in a case where predetermined time elapses from a time point when each of the dynamic tables is created, or in a case where a predetermined time elapses from the previous update.

### (Step ST103)

Then, a user who is a holder of the terminal 50 inputs a departure point and a destination to the terminal 50 for the purpose of reserving a use of a shared car. The terminal 50 transmits information indicating the received departure and destination to the central management server 40. Here, the terminal 50 may receive an estimated departure time point, an estimated arrival time point, a priority condition, or the like, and transmit the received information to the central management server 40. The priority condition is a condition which has a priority in a movement plan. For example, the priority condition is information indicating a rank (priority level) of a condition required to have a priority, among a fare, traveling time, and traveling distance.

### (Step ST104)

The movement plan creation unit 404 of the central management server 40 creates a movement plan with reference to the map information and the dynamic table in the storage unit 406, based on the information which is received and indicates the received departure and destination. The created movement plan includes a route to a destination, which includes an EV car pool or a charging station to be used, and includes supply details received by an EV car pool or a charging station on the route. The process will be described later in detail.

### (Step ST105)

The communication unit 401 of the central management server 40 transmits information indicating at least one of movement plans created by the movement plan creation unit 404 to the terminal 50.

### (Step ST 106)

The terminal 50 receives information indicating the movement plans, from the central management server 40, and displays at least one of the movement plans, on the screen.

### (Step ST107)

The user selects any one of the displayed movement plans through a touch panel of the terminal 50, and instructs a reservation of a shared car for the selected movement plan.

The terminal 50 receives the reservation of a shared car for the movement plan selected by the user, and transmits information of an instruction of the reservation of a shared car for the selected movement plan to the central management server 40.

### (Step ST108)

The reservation process unit 405 of the central management server 40 performs a process of accepting the reservation of a shared car, based on the information received from the terminal 50, and based on the details of the movement plan selected by the user.

### (Step ST109)

Then, the movement plan creation unit 404 of the central management server 40 monitors whether or not there is a more suitable route than the route of the accepted reservation. In a case where a change to a more suitable route is performed, a reservation monitoring process of changing reservation details is performed. Details thereof will be described.

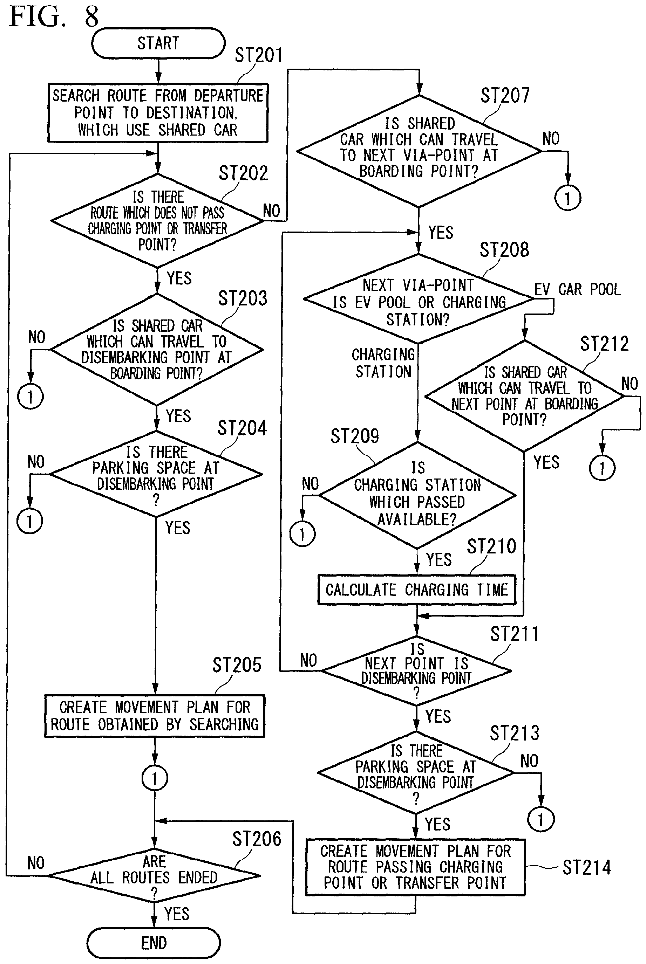

Next, an example of a movement plan creation process included in the route searching method for a rechargeable vehicle, which is illustrated in FIG. 7 will be described with reference to FIG. 8. FIG. 8 is a flowchart illustrating an example of the movement plan creation process included in the route searching method for a rechargeable vehicle, which is illustrated in FIG. 7.

### (Step ST201)

The movement plan creation unit 404 searches a route for traveling from a departure point to a destination by using a shared car, with reference to the map information in the storage unit 406, based on the information which is received from the terminal 50, and indicates the departure and the destination.

Specifically, in a case where the departure and the destination are set, the movement plan creation unit 404 searches an EV car pool in a boarding point in a range of a predetermined distance from the departure point, and an EV car pool in a disembarking point in a range of a predetermined distance from the destination, with reference to the map information. The movement plan creation unit 404 searches a route from the EV car pool in the boarding point to the EV car pool at the disembarking point, with reference to the map information. The movement plan creation unit 404 searches an EV car pool or a charging station which is passed on the route. The movement plan creation unit 404 searches a route from the departure point to the destination, a route from the disembarking point to the destination or from the destination to the disembarking point, with reference to the map information.

In this manner, the movement plan creation unit 404 obtains, for example, a plurality of Routes 1 to 18 described in FIG. 6, through the searching.

The movement plan creation unit 404 obtains a moving distance, moving time, and consumed power on each of Routes 1 to 18, with reference to the movement condition information and the facility information in the storage unit 406.

### (Step ST202)

The movement plan creation unit 404 selects one route from the Routes 1 to 18 obtained through the searching. The movement plan creation unit 404 determines whether or not the selected route is a route which passes a transfer point (EV car pool) or a charging point (charging station) between the boarding point and the disembarking point.

For example, the movement plan creation unit 404 selects Route 1. In this case, the movement plan creation unit 404 determines that Route 1 is a route which does not pass the transfer point or the charging point, and proceeds to the process of Step ST203.

### (Step ST203)

In a case where it is determined that the selected Route 1 is a route which does not pass the transfer point or the charging point, the movement plan creation unit 404 determines whether or not a shared car having a state of charge which allows traveling to the EV car pool 104 [E point] at the disembarking point is included among shared cars ensured at the EV car pool 101 [A point] in the boarding point of Route 1, with reference to the dynamic table 461 for an EV car pool in the storage unit 406. Specifically, the movement plan creation unit 404 determines whether or not a shared car having a state of charge which is equal to or greater than consumption power required when traveling on Route 1 is performed is ensured at the EV car pool in the boarding point.

### (Step ST204)

In a case where it is determined that the shared car having a state of charge which allows traveling to the EV car pool 104 [E point] at the disembarking point is included among shared cars ensured at the EV car pool 101 [A point] in the boarding point of Route 1, the movement plan creation unit 404 determines whether or not a vacant space which allows parking of a shared car can be ensured at the EV car pool 104 [E point] at the disembarking point of Route 1, at an estimated arrival time point, based on the reservation state of the dynamic table 461 for an EV car pool. The movement plan creation unit 404 obtains a time point, for example, obtained by adding a moving time required when traveling on Route 1 is performed from the current time point, as an estimated arrival time point. The embodiment is not limited to the above descriptions. The movement plan creation unit 404 may obtain a time point obtained by adding the moving time to the estimated departure time point designated by a user, as the estimated arrival time point.

### (Step ST205)

In a case where it is determined that a vacant space which allows parking of a shared car can be ensured at the EV car pool 104 [E point] at the disembarking point of Route 1, at the estimated arrival time point, the movement plan creation unit 404 creates a movement plan of Route 1. That is, the movement plan creation unit 404 obtains a fare in a case where Route 1 is used, and creates a movement plan including information. The included information indicates the obtained fare, route details (departure → EV car pool 101 [A point] → destination → EV car pool 104 [E point]) which have already been obtained in Step ST201, a time point at a time of arrival to an EV car pool or a charging station on the route, a moving distance, moving time, and consumed power. The movement plan creation unit 404 creates a movement plan including supply details (for example, a vehicle ID of a shared car to be replaced, a charger ID of a charger for performing charging, and the like), which are received by an EV car pool or a charging station used on Route 1.

### (Step ST206)

The movement plan creation unit 404 determines whether or not the determination process of Step ST202 on all routes is ended. In a case where it is determined that the determination process of Step ST202 on all routes is ended, the movement plan creation unit 404 causes the process to proceed to Step ST105 illustrated in FIG. 7.

In a case where it is determined that the determination process of Step ST202 on all routes is not ended, the movement plan creation unit 404 causes the process to return to Step ST202.

### (Step ST207)

In Step ST202, the movement plan creation unit 404 selects Route 13, for example. In this case, the movement plan creation unit 404 determines that Route 13 is a route passing a transfer point or a charging point, and proceeds to the process of Step ST207.

In this manner, in a case where it is determined that selected Route 13 is the route passing a transfer point or a charging point, the movement plan creation unit 404 determines whether or not a shared car having a state of charge which allows traveling to the charging station 203 [I point] in the next via-point is included among shared cars ensured at the EV car pool 102 [B point] in the boarding point on Route 13, with reference to the dynamic table 461 for an EV car pool in the storage unit 406. Specifically, the movement plan creation unit 404 obtains consumption power required for traveling to the charging station 203 [I point] from the EV car pool 102 [B point] on Route 13, and determines whether or not a shared car having a battery of a state of charge which is equal to or greater than the obtained consumed power is ensured.

### (Step ST208)

In a case where it is determined that a shared car having a state of charge which allows traveling to the next via-point is provided, the movement plan creation unit 404 determines whether the next point is a charging station or an EV car pool.

In a case of Route 13, since the next point of the EV car pool 102 [B point] is the charging station 203 [I point], the movement plan creation unit 404 proceeds to Step ST209.

### (Step ST209)

In a case where it is determined that the next point is a charging station, the movement plan creation unit 404 determines whether or not a charger of which a use is not estimated at an estimated time point at which arrival to the charging station is performed is included among chargers installed at the charging station, with reference to the dynamic table 462 for a charging station in the storage unit 406.

### (Step ST210)

In a case where it is determined that a charger of which a use is not estimated at an estimated time point at which arrival to the charging station is performed is included among chargers installed at the charging station, the movement plan creation unit 404 calculates time taken for charging power which allows traveling to the next charging station or the next EV car pool from the charging station.

### (Step ST211)

Then, the movement plan creation unit 404 determines whether or not the next point is the disembarking point. In a case of Route 13, the EV car pool 107 [J point] is next to the charging station 203 [I point]. Thus, the movement plan creation unit 404 determines the next point is not the disembarking point, and causes the process to return to Step ST208.

Returning to Step ST208, the movement plan creation unit 404 determines that the next point is an EV car pool, and proceeds to Step ST212.

### (Step ST212)

Then, the movement plan creation unit 404 determines whether or not a shared car having a state of charge which allows traveling to the next point is included among shared cars ensured at the EV car pool 107 [J point] in the via-point on Route 13, with reference to the dynamic table 461 for an EV car pool in the storage unit 406. Specifically, the movement plan creation unit 404 obtains consumption power required for traveling to the EV car pool 104 [E point] at the disembarking point, from the EV car pool 107 [J point] on Route 13, and determines whether or not a shared car having a state of charge which is equal to or greater than the obtained consumed power is ensured.

In a case where it is determined that a shared car having a state of charge which is equal to or greater than the consumed power required for allowing traveling to the next via-point is ensured, the movement plan creation unit 404 proceeds to Step ST211.

### (Step ST213)

In Step ST211, in a case where it is determined that the next point is the disembarking point, the movement plan creation unit 404 determines whether or not a vacant space which allows parking of a shared car can be ensured at the EV car pool at the disembarking point of Route 13, at an estimated arrival time point, with reference to the dynamic table 461 for an EV car pool in the storage unit 406. The movement plan creation unit 404 obtains a time point as the estimated arrival time point. The obtained time point is, for example, obtained by adding a moving time required for moving on Route 13 from the current time point, and time taken for charging at the charging station 203 [I point]. The embodiment is not limited to the above descriptions. The movement plan creation unit 404 may obtain a time point obtained by adding the moving time and the charging time to the estimated departure time point designated by a user, as the estimated arrival time point.

### (Step ST214)

Then, in a case where it is determined that a vacant space which allows parking of a shared car can be ensured at the EV car pool 104 [E point] at the disembarking point of Route 13, at the estimated arrival time point, the movement plan creation unit 404 creates a movement plan of Route 13. That is, the movement plan creation unit 404 obtains a fare in a case where Route 13 is used, with reference to the dynamic table 461 for an EV car pool in the storage unit 406. The movement plan creation unit 404 creates a movement plan including information. The included information indicates the obtained fare, route details (departure → EV car pool 102 [B point] → charging station 203 [I point] → EV car pool 107 [J point] → destination → EV car pool 104 [E point]) which have already been obtained in Step ST201, a time point at a time of arrival to an EV car pool or a charging station on the route, a moving distance, moving time, and consumed power. The movement plan creation unit 404 creates a movement plan including supply details (for example, a vehicle ID of a shared car to be replaced, a charger ID of a charger for performing charging, and the like), which are received by an EV car pool or a charging station used on Route 1.

In a case where the movement plan creation unit 404 determines to be NO in the processes of Steps ST203, 204, 207, 209, and 212, the movement plan creation unit 404 may calculate a waiting time. For example, in a case where a reservation for using a shared car or a charger at an arrival time point is input, the movement plan creation unit 404 calculates time taken to wait for an end of the reservation. In a case where a shared car having a state of charge which allows traveling to the next point is not provided, the movement plan creation unit 404 calculates a waiting time taken until charging power which allows traveling to the next point is ended.

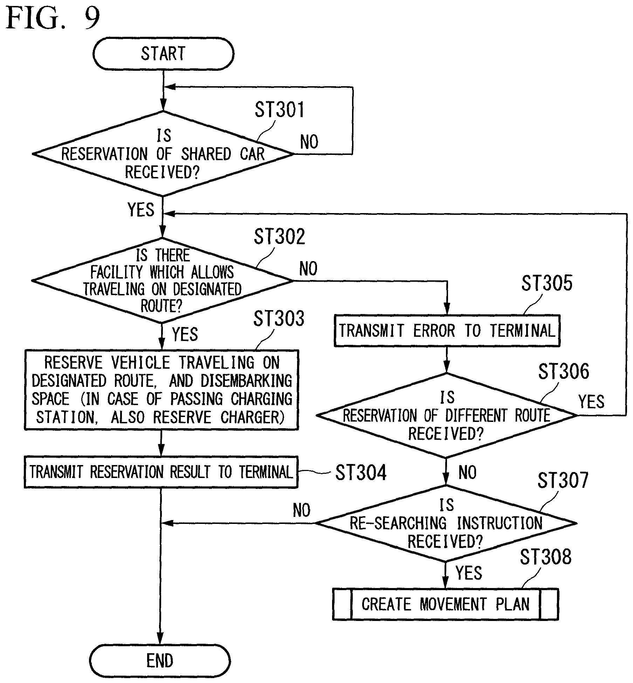

Next, an example of a reservation process included in the route searching method for a rechargeable vehicle, which is illustrated in FIG. 7 will be described with reference to FIG. 9. FIG. 9 is a flowchart illustrating an example of the reservation process included in the route searching method for a rechargeable vehicle, which is illustrated in FIG. 7.

### (Step ST301)

The reservation process unit 405 determines whether or not information for an instruction of a reservation of a shared car is received from the terminal 50. The information for an instruction of a reservation of a shared car includes information indicating the movement plan selected by the user.

### (Step ST302)

In a case where it is determined that the information for an instruction of a reservation of a shared car is received from the terminal 50, the reservation process unit 405 determines whether or not a facility which allows traveling on the route of the movement plan selected by the user is ensured, based on the received information, with reference to the dynamic table 461 for an EV car pool, and the dynamic table 462 for a charging station. In other words, the reservation process unit 405 determines whether or not a facility of which a use is estimated in the movement plan created by the movement plan creation unit 404 is ensured. This is because there is a probability of creating a movement plan of which a reservation is impossible in a case where a reservation by another user is provided during a period from the creation of the movement plan until the reservation.

For example, it is assumed that the reservation process unit 405 receives information for an instruction of a reservation of a shared car for the movement plan of Route 1. In this case, the reservation process unit 405 determines whether or not a shared car having a state of charge which allows traveling from the EV car pool 101 [A point] in the boarding point to the EV car pool 104 [E point] at the disembarking point is ensured, and a vacant space which allows parking of the shared car at the EV car pool 104 [E point] at the disembarking point can be ensured.

### (Step ST303)

In a case where it is determined that a facility which allows traveling on the route of the movement plan selected by the user is ensured, the reservation process unit 405 reserves a shared car traveling on the route of the movement plan selected by the user, and a parking space at the disembarking point.

Here, in a case where the via-point on the route of the movement plan selected by the user includes a charging station, the reservation process unit 405 reserves a charger installed at the charging station in the via-point.

Specifically, the reservation process unit 405 writes a user ID, a vehicle ID of a shared car used in the reserved movement plan, the departure point, the destination, the reservation time, the reserved route, and the via-point which are correlated to each other, in the dynamic table 463 of the reservation information. The user ID is correlated with terminal identification information of the terminal 50 which transmits information for an instruction of the reservation.

### (Step ST304)

The reservation process unit 405 transmits information indicating a reservation result to the terminal 50.

### (Step ST305)

In Step ST302, in a case where it is determined that a facility which allows the route of the movement plan selected by the user is not ensured, the reservation process unit 405 transmits information indicating an error to the terminal 50 through the communication unit 401. For example, the transmission of information indicating an error corresponds to a case where another user reserves a shared car which has not been reserved at a stage of the movement plan creation process is reserved during a period until the reservation is received.

### (Step ST306)

The reservation process unit 405 determines whether or not information for an instruction of a reservation of a shared car in a different movement plan is received from the terminal 50.

In a case where it is determined that the information for an instruction of a reservation of a shared car in a different movement plan is received from the terminal 50, the reservation process unit 405 causes the process to return to Step ST302.

### (Step ST307)

In a case where the information for an instruction of a reservation of a shared car for a different movement plan is not received from the terminal 50, the reservation process unit 405 determines whether or not information indicating an instruction of re-searching is received from the terminal 50.

In a case where it is determined that information indicating an instruction of re-searching is not received from the terminal 50, the reservation process unit 405 ends the reservation process.

### (Step ST308)

In a case where it is determined that information indicating an instruction of re-searching is received from the terminal 50, the reservation process unit 405 performs the movement plan creation process which is described with reference to FIG. 8.

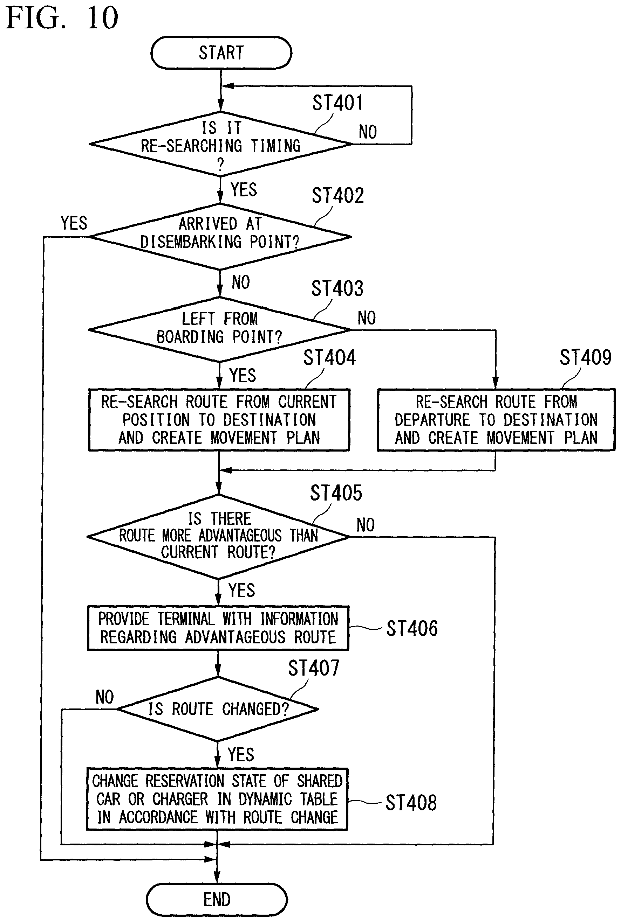

Next, an example of a reservation monitoring process included in the route searching method for a rechargeable vehicle, which is illustrated in FIG. 7, will be described with reference to FIG. 10. FIG. 10 is a flowchart illustrating an example of the reservation monitoring process included in the route searching method for a rechargeable vehicle, which is illustrated in FIG. 7. Here, the reservation monitoring process for the on-board unit 31 which is selected among the plurality of on-board units 31, 32, 33, ... by the reservation process unit 405 will be described. However, the reservation monitoring process is not limited thereto. The reservation process unit 405 may perform the processes of FIG. 10 for each on-board unit mounted in a reserved shared car.

### (Step ST401)

The movement plan creation unit 404 determines whether or not it is a re-searching timing for a route. For example, in a case where it is an update timing of the dynamic table, in a case where predetermined time elapses from when the previous movement plan has been created, or in a case where a traveling shared car changes the route of a movement plan in the middle of being performed, the movement plan creation unit 404 determines that it is a re-searching timing for a route.

Specifically, the movement plan creation unit 404 determines whether or not it is a timing to update the dynamic table 461 for an EV car pool, the dynamic table 462 for a charging station, and the dynamic table 463 of the reservation information. In a case where a predetermined time elapses from a time point when each of the dynamic tables has been created, and in a case where predetermined time elapses from the previous update, the movement plan creation unit 404 determines that it is a timing to update the dynamic tables. In a case where a new reservation is set by the reservation process unit 405, in a case where information is received from the EV car pool management servers 11, 12, ..., in a case where information is received from the charging station management servers 21, 22, 23, ..., or in a case where information is received from the on-board units 31, 32, 33, ..., the movement plan creation unit 404 determines that it is a timing to update the dynamic tables.

The movement plan creation unit 404 determines whether or not the traveling shared car changes the route in the movement plan in the middle of being performed, based on the positional information received from the on-board unit 31, with reference to the dynamic table 463 of the reservation information. In a case where the position of the on-board unit 31 is off the route, the movement plan creation unit 404 determines that the traveling shared car changes the route of the movement plan in the middle of being performed.

### (Step ST402)

The movement plan creation unit 404 determines whether or not a shared car 61 arrives an EV car pool at the disembarking point, based on the positional information received from the on-board unit 31, with reference to the dynamic table 461 for an EV car pool and the dynamic table 463 of the reservation information in the storage unit 406.

### (Step ST403)

In a case where it is determined that the shared car 61 does not arrive an EV car pool at the disembarking point, the movement plan creation unit 404 determines whether or not the shared car 61 leaves an EV car pool in the boarding point, based on the positional information received from the on-board unit 31, with reference to the dynamic table 461 for an EV car pool and the dynamic table 463 of the reservation information in the storage unit 406.

### (Step ST404)

In a case where it is determined that the shared car 61 leaves an EV car pool in the boarding point, the movement plan creation unit 404 searches a route from the current point to the destination, with reference to the dynamic table 463 of the reservation information. The movement plan creation unit 404 performs a movement plan creation process of creating a movement plan of the route obtained by the searching. The movement plan creation process is the same as the process which is described with reference to FIG. 8 except that the departure is changed to the current point.

### (Step ST405)

The movement plan creation unit 404 compares the movement plan obtained in Step ST404 with the movement plan which is currently performed, and determines whether or not there is a route of a movement plan which is more advantageous than the movement plan which is currently performed. The movement plan creation unit 404 determines, for example, that a movement plan satisfying the priority condition is an advantageous movement plan based on the priority condition set for each user. For example, in a case where the minimum cost (cheapest fare) is determined as the priority condition, the movement plan creation unit 404 assigns a priority rank having an order of a low fare to movement plans as the priority rank in the priority condition. The movement plan creation unit 404 determines that a movement plan having a highest priority rank is the movement plan satisfying the priority condition. That is, the movement plan creation unit 404 determines that the movement plan having the cheapest fare is an advantageous movement plan. In a case where the movement plan is changed to the movement plan satisfying the priority condition, the movement plan creation unit 404 determines whether or not there is a movement plan having a fare cheaper than the movement plan which is currently performed. For example, the movement plan creation unit 404 compares a fare in a case where the movement plan is changed to the movement plan satisfying the priority condition with the fare of the movement plan which is currently performed. In a case where the fare in a case of being changed is low, the movement plan creation unit 404 determines that the priority rank of the movement plan obtained in Step ST404 is higher than the priority rank of the movement plan which is currently performed. The movement plan creation unit 404 determines that a movement plan which is determined to have a priority rank higher than the priority rank of the movement plan which is currently performed is an advantageous movement plan.

### (Step ST406)

In a case where it is determined that the movement plan obtained in Step ST404 is more advantageous than the movement plan which is currently performed, the reservation process unit 405 transmits information regarding the movement plan which is determined to be advantageous to the terminal 50 of the user.

### (Step ST407)

The reservation process unit 405 determines whether or not information for an instruction of changing a movement plan to the movement plan determined to be advantageous is received from the terminal 50.

### (Step ST408)

In a case where the information for an instruction of changing a movement plan to the movement plan determined to be advantageous is received from the terminal 50, the reservation process unit 405 rewrites reservation information (that is, information regarding the movement plan which is currently performed) which is in the dynamic table 463 of the reservation information and is correlated with the on-board unit 31, based on the movement plan determined to be advantageous.

### (Step ST409)

In Step ST403, in a case where it is determined that the shared car 61 does not leave the EV car pool in the boarding point, the movement plan creation unit 404 performs the movement plan creation process. In the movement plan creation process, a route from the departure point to the destination is searched with reference to the dynamic table 463 of the reservation information, and a movement plan of the route obtained by the searching is created. The movement plan creation process is the same as the process which is described with reference to FIG. 8.

The movement plan creation unit 404 proceeds to Step ST405. The movement plan creation unit 404 compares the movement plan obtained in Step ST409 with the movement plan which is currently reserved. The movement plan creation unit 404 determines whether or not a movement plan created after details of the movement plan are reserved is more advantageous than the movement plan which is currently reserved.

In a case where it is determined that the movement plan obtained in Step ST404 is more advantageous than the movement plan which is currently reserved, the reservation process unit 405 proceeds to Step ST406, and transmits information regarding the movement plan which is determined to be advantageous to the terminal 50 of the user.

In a case where the information for an instruction of changing a movement plan to the movement plan determined to be advantageous is received from the terminal 50, the reservation process unit 405 rewrites reservation information (that is, information regarding the movement plan which is currently reserved) which is in the dynamic table 463 of the reservation information and is correlated with the on-board unit 31, based on the movement plan determined to be advantageous.

As described above, the movement plan creation unit 404 of the central management server 40 according to the embodiment can create a movement plan based on the map information and the facility information. The created movement plan includes a route to the destination, which includes an EV car pool or a charging station to be used, and includes supply details received by an EV car pool or a charging station on the route. Thus, the central management server 40 can determine an EV car pool or a charging station to be used on a route to the destination, and can provide the user with the determined route, and supply details received by an EV car pool or a charging station to be used on the route. Accordingly, the user only designates a destination and an arrived point, and can know an EV car pool or a charging station to be used on the route to the destination. Even when reaching the destination with a state of charge of a shared car which is used is impossible, the user can know an EV car pool for replacing another shared car on the route, or a charging station at which the shared car is charged on the route.

The movement plan creation unit 404 of the central management server 40 according to the invention creates a movement plan. As the supply facility to be used on the route, the movement plan includes an EV car pool ensuring a shared car having a state of charge which allows traveling to the next EV car pool or the next charging station on the route, or includes a charging station including an available charger which is usable by a shared car when the shared car has arrived. Thus, the central management server 40 can create a movement plan which is movable to the destination without the waiting time, with reference to the dynamic tables.

The movement plan creation unit 404 of the central management server 40 according to the invention creates a movement plan. As the supply facility to be used on the route, the movement plan includes an EV car pool at which the shared car which has traveled is replaced with another shared car, or includes a charging station at which power is supplied to the shared car which has traveled. Thus, the central management server 40 can search a supply facility (EV car pool or charging station) which allows smooth transfer or charging, in advance even when transfer or charging is required on the route. Accordingly, it is possible to avoid occurrence of a situation in which a usable shared car is not provided or a situation in which a user waits for using a charger for a long term in a point in which a shared car arrives at a transfer point or a charging point.

The dynamic table update unit 403 of the central management server 40 updates the dynamic tables based on the terminal, the EV car pool, the charging station, and the information received from the on-board unit. Thus, even when facility information fluctuating by using a shared car is ever-changing, it is possible to apply information in accordance with the latest use state to the dynamic tables. The fluctuating facility information includes, for example, the number of shared cars which are ensured in an EV car pool, and are used, and a usable time zone thereof, a usable charger at a charging station, and a usable time zone thereof, and a state of charge of the shared car.

The central management server 40 searches a route from the departure point to the destination, with reference to the dynamic tables updated by the dynamic table update unit 403. The central management server 40 creates a movement plan which includes an EV car pool to be used on the route obtained by the searching, and supply details received by the EV car pool. Thus, the movement plan creation unit 404 can create a movement plan in accordance with the latest use state, and can provide the user with the created movement plan.

In a case where a shared car having a state of charge which allows traveling to the destination is not provided at an EV car pool around the departure point, the movement plan creation unit 404 of the central management server 40 creates a movement plan for allowing traveling to the destination through another EV car pool or another charging station. Thus, even when a shared car which is around the departure point, and can travel to the destination is not provided, it is possible to provide a route in which replacement with another shared car on the route or charging at a charging station on the route is performed. In addition, a shared car replaced on the route or a charging station on the route is reserved in advance, and thus it is possible to assist arrival to the destination as estimated.

In a case where a travel route of the traveling shared car is off the route of the movement plan which is currently performed, the movement plan creation unit 404 of the central management server 40 according to the embodiment creates a new movement plan having a route different from the route of the movement plan which is currently performed. Thus, the movement plan creation unit 404 can provide the user with the optimal movement plan in accordance with the current position of the shared car.

In a case where the movement plan creation unit 404 acquires new facility information, in a case where the dynamic table is updated, or in a case where predetermined time elapses from when the previous creation was performed, that is, when the movement plan was created, the movement plan creation unit 404 creates a new movement plan. Thus, the movement plan creation unit 404 can create a movement plan in accordance with the latest use state, and provide the user with the created movement plan.

In a case where the information of the dynamic table is updated, the movement plan creation unit 404 of the central management server 40 obtains a route different from the route which is currently performed or currently reserved, by re-searching. In a case where the route obtained by the re-searching is more advantageous than the route which is currently performed or currently reserved the movement plan creation unit 404 receives a change of a movement plan from the user. Thus, even when the number of shared cars which are ensured in an EV car pool, and are used, and the usable time zone thereof, the usable charger at a charging station, and the usable time zone thereof, a state of charge of the shared car, and the like are changed, it is possible to provide the user with a movement plan which is created in accordance with the latest use state, and is advantageous for the user.

The movement plan creation unit 404 of the central management server 40 selects the optimal movement plan satisfying the priority condition, among a plurality of movement plans, based on the set priority condition. Thus, even when a plurality of movement plans is created, it is possible to provide the user with only a movement plan which is advantageous for the user.

The movement plan creation unit 404 of the central management server 40 creates a movement plan based on the map information and the facility information. The movement plan includes a moving route between the departure or the current position, and the first EV car pool on the route, and a moving route between the destination and the last EV car pool on the route. For example, the movement plan creation unit 404 creates a movement plan which includes the route from the current position of the user to the first EV car pool, and in which the transportation for traveling on the route is determined. Thus, the user only designates a destination and an arrived point, and can know an EV car pool or a charging station to be used on the route to the destination.

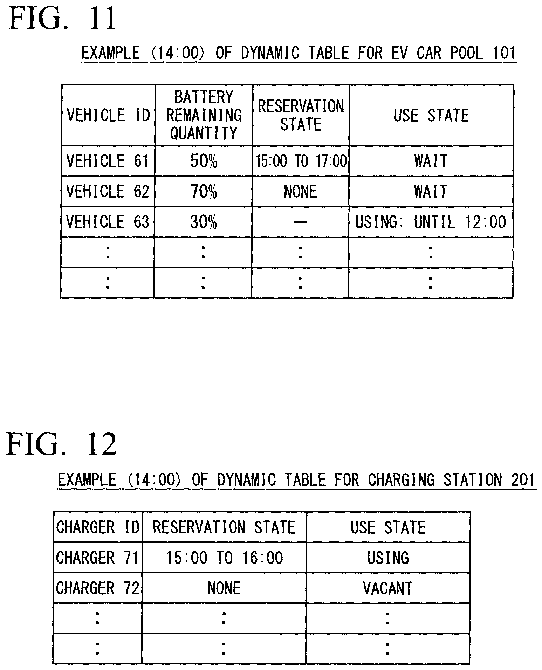

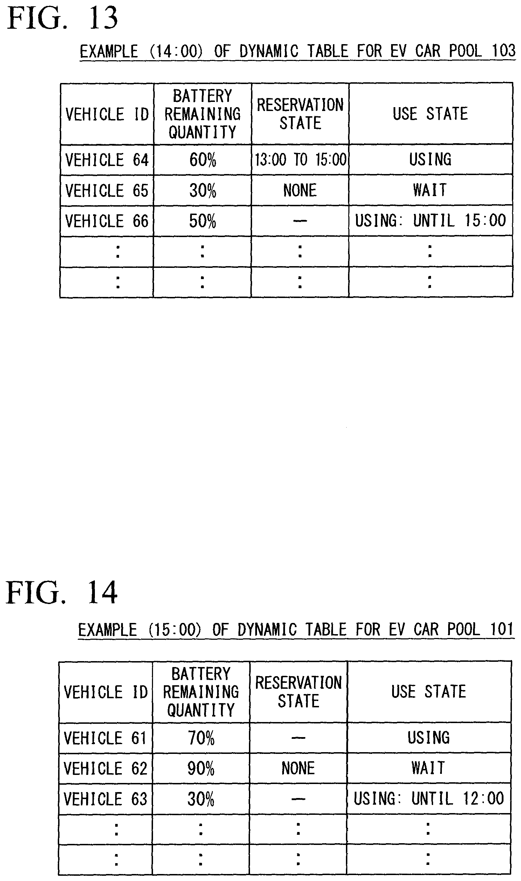

Next, an example of the dynamic table in the central management server 40 according to the embodiment will be described with reference to FIGS. 11 to 16. FIGS. 11 to 13 are diagrams illustrating an example of the dynamic table at 14:00. FIGS. 14 to 16 are diagrams illustrating an example of the dynamic table at 15:00 on the same day.

As illustrated in FIGS. 11 and 14, at the EV car pool 101, a change at 14:00 to 15:00 is as follows.
- States of charge of the shared cars 61 and 62 are increased.

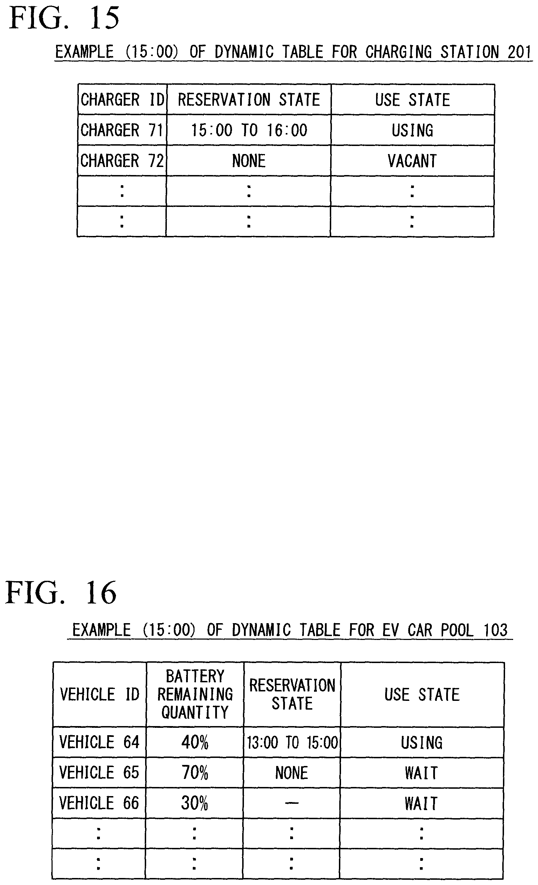

As illustrated in FIGS. 12 and 15, at the charging station 201, a change at 14:00 to 15:00 is not particular.

As illustrated in FIGS. 13 and 16, at the EV car pool 103, a change at 14:00 to 15:00 is as follows.
- States of charge of the shared cars 64, 65, and 66 are increased.

For example, with reference to FIG. 11, the movement plan creation unit 404 determines that ensuring a shared car having a state of charge which allows traveling to the destination from the EV car pool 101 is impossible. With reference to FIG. 12, in a case where charging is performed on a route from the EV car pool 101 through the charging station 201, the movement plan creation unit 404 determines that traveling to the destination is allowed. In this case, the movement plan creation unit 404 creates a movement plan for Route 4. As described above, Route 4 is a course of departure → EV car pool 101 [A point] → charging station 201 [C point] → destination → EV car pool 104 [E point].

With reference to FIG. 13, in a case where a shared car is replaced on a route from the EV car pool 101 through the EV car pool 103, the movement plan creation unit 404 determines that a shared car which can travel to the destination is not ensured at the EV car pool 103. In this case, the movement plan creation unit 404 does not allow creation of a movement plan for Route 7. As described above, Route 7 is a course of departure → EV car pool 101 [A point] → EV car pool 103 [D point] → destination → EV car pool 104 [E point].

The user considers the movement plan for Route 4 as being reserved. In the movement plan for Route 4, the traveling time is 4 hours.

After that, the state of charge of a shared car at the EV car pool 103 is increased. With reference to FIG. 16, in a case where a shared car is replaced on a route from the EV car pool 101 through the EV car pool 103, the movement plan creation unit 404 determines that a shared car 65 which can travel to the destination is ensured at the EV car pool 103. In this case, the movement plan creation unit 404 creates a movement plan for Route 7. In the movement plan for Route 7, the traveling time is 3.5 hours.

Here, if the movement plan creation unit 404 compares the traveling time in the movement plan for Route 4 with the traveling time in the movement plan for Route 7, the traveling time in the movement plan for Route 7 is shorter than that for Route 4. Thus, the movement plan creation unit 404 determines that not Route 4 but Route 7 is a route of an advantageous movement plan. Accordingly, the movement plan creation unit 404 can provide the user with an advantageous movement plan.

A process in which a program for realizing functions of the central management server 40 is recorded in a computer readable recording medium, and the program recorded in the recording medium is read in a computer system so as to be executed may be performed. Here, the "computer system" is set to include OS or hardware of peripheral devices and the like. The "computer system" is set to include a WWW system which includes a homepage providing environment (or display environment). The "computer readable recording medium" refers to a portable medium such as a flexible disk, a magneto-optic disk, a ROM, and a CD-ROM, and to a storage device such as a hard disk mounted in the computer system. The "computer readable recording medium" is set to include a medium which holds a program for a predetermined period, as with a volatile memory (RAM) in a computer system which functions as a server or a client in a case where a program is transmitted through a network such as the Internet, or through a communication line such as a telecommunication line.

The program may be transmitted from a computer system in which the program is stored in a storage device and the like, through a transmission medium, or the program may be transmitted to other computer systems by using a transmission wave in a transmission medium. Here, the "transmission medium" of transmitting the program refers to a medium having a function of transmitting information, as with a network (communication network) such as the Internet, or a communication line such as a telecommunication line. The program may be used for realizing some of the above-described functions. Further, the program may be a program which can realize the above-described functions by combination with a program which has been already recorded in a computer system, that is, a so-called difference file (difference program).

### Industrial Applicability

The route searching device for a rechargeable vehicle, the route searching method for a rechargeable vehicle, and the program which are described above can provide a facility which is usable on a route to a destination, in accordance with a use state of a facility, in a car sharing system in which people share a rechargeable vehicle.

### Reference Signs List

11 EV CAR POOL MANAGEMENT SERVER
21 CHARGING STATION MANAGEMENT SERVER
31 ON-BOARD UNIT
40 CENTRAL MANAGEMENT SERVER
50 TERMINAL
61 SHARED CAR
71 CHARGER
101 EV CAR POOL
201 CHARGING STATION
401 COMMUNICATION UNIT
402 DYNAMIC TABLE CREATION UNIT
403 DYNAMIC TABLE UPDATE UNIT
404 MOVEMENT PLAN CREATION UNIT
405 RESERVATION PROCESS UNIT
406 STORAGE UNIT
461 DYNAMIC TABLE FOR EV CAR POOL
462 DYNAMIC TABLE FOR CHARGING STATION
463 DYNAMIC TABLE OF RESERVATION INFORMATION

## Claims

1. A central management server which serves as a route searching device for a first rechargeable vehicle, comprising:
a communication unit (401) configured to receive information from an EV car pool management server (11, 12, ...) of a vehicle supply facility for supplying a second rechargeable vehicle, a charging station management server (21, 22, 23, ...) of a charging facility which is provided with a charger at which power can be supplied to a battery of the first and second rechargeable vehicles, and an on-board unit (31, 32, 33, ...) of the first and second rechargeable vehicles;
a dynamic table creation unit (402) configured to create facility information including information regarding a use state and a reservation state of a supply facility including the vehicle supply facility, and the charging facility, and information regarding a state of charge of the second rechargeable vehicle, based on the information received by the communication unit (401); and
a movement plan creation unit (404) configured to create a movement plan including, based on map information and the facility information, a route to a disembarking point of the first or second rechargeable vehicle via a destination, and supply details received by the supply facility on the route, the route including the supply facility to be used; wherein
the disembarking point is a further vehicle supply facility;
the facility information regarding the use state includes information indicating availability of the second rechargeable vehicle and the charger at the present time,
the facility information regarding the reservation state includes information indicating a reservation time when the second rechargeable vehicle and the charger are reserved to be used, and
the movement plan creation unit (404) is configured to create the movement plan based on the facility information, the movement plan including, as the supply facility used on the route, at least one of:
the vehicle supply facility ensuring the second rechargeable vehicle which has the state of charge allowing to travel to the next supply facility; and
the charging facility including the available charger which is usable by the first rechargeable vehicle upon arrival.

2. The central management server according to Claim 1, wherein
the movement plan creation unit (404) is configured to create the movement plan which includes, as the supply facility used on the route, at least one of:
a transferring vehicle supply facility at which the first rechargeable vehicle which has traveled can be replaced with the second rechargeable vehicle; and
the charging facility which can supply power to the first rechargeable vehicle which has traveled.

3. The central management server according to any one of Claims 1 or 2, further comprising:
a storage unit (406) configured to store the facility information; and
a dynamic table update unit (403) configured to update the facility information in the storage unit (406) based on details of the movement plan, and to update the facility information in the storage unit (406) based on information indicating a state of charge of the second rechargeable vehicle received by the communication unit (401).

4. The central management server according to any one of Claims 1 to 3, wherein
the facility information includes the information received by the communication unit (401), the information including at least one of:
information indicating the second rechargeable vehicle ensured by the vehicle supply facility;
information indicating a state of charge of the second rechargeable vehicle;
information indicating a reservation state of the second rechargeable vehicle;
information indicating a reservation state of a charger provided in the charging facility;
information used to calculate a fare of the second rechargeable vehicle or the charging facility; and
information used to calculate a waiting time in the vehicle supply facility or the charging facility.

5. The central management server according to any one of Claims 1 to 4, wherein
the communication unit (401) is configured to receive positional information indicating a current position of the first rechargeable vehicle,
the movement plan creation unit (404) is configured to create the movement plan including a route from the current position to the destination, based on the positional information received by the communication unit (401), the map information, and the facility information, and
the route includes the supply facility to be used.

6. The central management server according to any one of Claims 1 to 5, wherein
the movement plan creation unit (404) is configured to create a new movement plan when it acquires new facility information, a case where a predetermined time elapses from when the movement plan was created the previous time, or a case where the route of the movement plan being performed by the first rechargeable vehicle is changed.

7. The central management server according to any one of Claims 1 to 6, wherein
the movement plan creation unit (404) is configured to create the movement plan based on the map information and the facility information, the movement plan including:
a moving route between a departure point or the current position, and the first supply facility on the route; or
a moving route between the destination and the last supply facility on the route.

8. The central management server according to any one of Claims 1 to 7, wherein
the movement plan creation unit (404) is configured to create the movement plan which includes, as the supply details received by the supply facility on the route, at least one of:
information indicating the second rechargeable vehicle or the charger used on the route;
a use start time point;
a use end time point;
information indicating a fare of the supply facility on the route; and
information indicating a waiting time of the supply facility used on the route.

9. The central management server according to Claim 6, wherein
the movement plan creation unit (404) is configured to:
compare the new movement plan with a current movement plan which is created before the new movement plan and currently performed by the first rechargeable vehicle; and
determine that the new movement plan is advantageous in a case where the new movement plan has at least one of a shortest time, minimum distance, minimum cost, minimum number of via-places.

10. The central management server according to any one of Claims 1 to 9, wherein
the movement creation unit (404) has a priority condition indicating a priority regarding at least one of a fare, traveling time and traveling distance, and
the movement plan creation unit (404) is configured to select an optimal movement plan satisfying the priority condition among a plurality of movement plans, based on the set priority condition.

11. A route searching method for a first rechargeable vehicle, the method comprising:
an acquisition step of acquiring facility information regarding a use state and a reservation state of a supply facility which includes a vehicle supply facility which supplies a second rechargeable vehicle, and a charging facility which is provided with a charger at which power is supplied to a battery of the first and second rechargeable vehicles; and
a movement plan creation step of creating a movement plan including, based on map information and the facility information, a route to a disembarking point of the first or second rechargeable vehicle via a destination and supply details received by the supply facility on the route, the route including the supply facility to be used,
the disembarking point being a further vehicle supply facility; wherein
the facility information regarding the use state includes information indicating availability of the second rechargeable vehicle and the charger at the present time,
the facility information regarding the reservation state includes information indicating a reservation time when the second rechargeable vehicle and the charger are reserved to be used, and
in the movement plan creation step, the movement plan is created based on the facility information, the movement plan including, as the supply facility used on the route, at least one of:
the vehicle supply facility ensuring the second rechargeable vehicle which has the state of charge allowing to travel to the next supply facility; and
the charging facility including the available charger which is usable by the first rechargeable vehicle upon arrival.

12. A program for causing a computer to execute the route searching method according to claim 11.

## Patentansprüche

1. Ein zentraler Verwaltungsserver, der als Routensuchgerät für ein erstes wiederaufladbares Fahrzeug dient, umfassend:
eine Kommunikationseinheit (401), die konfiguriert ist, um Informationen von einem EV-Fahrzeug-Pool-Verwaltungsserver (11, 12, ...) einer Fahrzeugversorgungsvorrichtung zur Bereitstellung eines zweiten wiederaufladbaren Fahrzeugs, einem Ladestationsverwaltungsserver (21, 22, 23, ...) einer Ladevorrichtung, die mit einem Ladegerät versehen ist, an dem eine Batterie des ersten und zweiten wiederaufladbaren Fahrzeugs mit Strom versorgt werden kann, oder einer Bordeinheit (31, 32, 33, ...) des ersten und zweiten wiederaufladbaren Fahrzeugs zu empfangen;
eine dynamische Tabellenerzeugungseinheit (402), die konfiguriert ist, um auf der Grundlage der von der Kommunikationseinheit (401) empfangenen Informationen Anlageninformationen, einschließlich Informationen bezüglich eines Nutzungszustands und eines Reservierungszustands, einer Versorgungsvorrichtung, einschließlich der Fahrzeugversorgungsvorrichtung und der Ladevorrichtung, sowie Informationen bezüglich eines Ladezustands des zweiten aufladbaren Fahrzeugs zu erzeugen; und
eine Bewegungsplan-Erstellungseinheit (404), die konfiguriert ist, um einen Bewegungsplan zu erstellen, der auf der Grundlage von Karteninformation und Anlageninformation eine Route zu einem Ausstiegspunkt des ersten oder zweiten wiederaufladbaren Fahrzeugs über ein Ziel enthält und um Versorgungsdetails, die von der Versorgungsvorrichtung auf der Route empfangen werden, zuzuführen, wobei die Route die zu verwendende Versorgungsvorrichtung enthält; wobei
wobei der Ausstiegspunkt eine weitere Fahrzeugversorgungsvorrichtung ist;
die Anlageninformation über den Nutzungszustand Informationen umfassen, die die Verfügbarkeit des zweiten wiederaufladbaren Fahrzeugs und des Ladegeräts zum gegenwärtigen Zeitpunkt angeben,
die Anlageninformation über den Reservierungszustand Informationen enthalten, die eine Reservierungszeit angeben, zu der das zweite wiederaufladbare Fahrzeug und das Ladegerät für die Benutzung reserviert sind, und
die Bewegungsplan-Erstellungseinheit (404) konfiguriert ist, um den Bewegungsplan auf der Grundlage der Anlageninformation zu erstellen, wobei der Bewegungsplan als die auf der Route verwendete Versorgungsvorrichtung mindestens eine von enthält:
der Fahrzeugversorgungsvorrichtung, die das zweite wiederaufladbare Fahrzeug bereit stellt, das den Ladezustand hat, der es erlaubt, zur nächsten Versorgungsvorrichtung zu fahren; und
die Ladevorrichtung einschließlich des verfügbaren Ladegeräts, das vom ersten wiederaufladbaren Fahrzeug bei der Ankunft benutzt werden kann.

2. Der zentrale Verwaltungsserver nach Anspruch 1, wobei
die Bewegungsplan-Erstellungseinheit (404) konfiguriert ist, um den Bewegungsplan zu erstellen, der als die auf der Route verwendete Versorgungsvorrichtung mindestens eine der folgenden Vorrichtungen enthält:
eine Überführungsfahrzeug-Versorgungsvorrichtung, bei der das erste gefahrene wiederaufladbare Fahrzeug durch das zweite wiederaufladbare Fahrzeug ersetzt werden kann; und
die Ladevorrichtung, die das erste gefahrene wiederaufladbare Fahrzeug mit Strom versorgen kann.

3. Der zentrale Verwaltungsserver nach einem der Ansprüche 1 oder 2, ferner umfassend:
eine Speichereinheit (406), die zur Speicherung der Anlageninformation konfiguriert ist; und
eine dynamische Tabellenaktualisierungseinheit (403), die so konfiguriert ist, dass sie die Anlageninformation in der Speichereinheit (406) auf der Grundlage von Details des Bewegungsplans aktualisiert, und dass sie die Anlageninformation in der Speichereinheit (406) auf der Grundlage von Information aktualisiert, die einen Ladezustand des zweiten wiederaufladbaren Fahrzeugs anzeigt, die von der Kommunikationseinheit (401) empfangen werden.

4. Der zentrale Verwaltungsserver gemäß einem der Ansprüche 1 bis 3, wobei
die Anlageninformation die Informationen umfassen, die von der Kommunikationseinheit (401) empfangen werden, wobei die Information mindestens eine der folgenden Angaben enthalten:
Information über das zweite wiederaufladbare Fahrzeug, das durch die Fahrzeugversorgungsvorrichtung bereit gestellt wird;
Information über den Ladezustand des zweiten wiederaufladbaren Fahrzeugs;
Information über den Reservierungszustand des zweiten aufladbaren Fahrzeugs;
Information über den Reservierungszustand eines in der Ladevorrichtung bereitgestellten Ladegeräts;
Information, die zur Berechnung eines Fahrpreises für das zweite wiederaufladbare Fahrzeug oder die Ladevorrichtung verwendet werden; und
Information, die zur Berechnung einer Wartezeit in der Fahrzeugversorgungsvorrichtung oder der Ladevorrichtung verwendet werden.

5. Der zentrale Verwaltungsserver gemäß einem der Ansprüche 1 bis 4, wobei
die Kommunikationseinheit (401) konfiguriert ist, um Positionsinformation zu empfangen, die eine aktuelle Position des ersten wiederaufladbaren Fahrzeugs anzeigen,
die Bewegungsplan-Erstellungseinheit (404) konfiguriert ist, um den Bewegungsplan, einschließlich einer Route von der aktuellen Position zum Ziel, auf der Grundlage der von der Kommunikationseinheit (401) empfangenen Positionsinformation, der Karteninformation und der Anlageninformationen zu erstellen, und
wobei die Route die zu verwendende Versorgungsvorrichtung umfasst.

6. Der zentrale Verwaltungsserver gemäß einem der Ansprüche 1 bis 5, wobei
die Bewegungsplan-Erstellungseinheit (404) konfiguriert ist, um einen neuen Bewegungsplan zu erstellen, wenn sie neue Anlageninformation erfasst, wenn eine vorbestimmte Zeit ab dem Zeitpunkt der vorherigen Erstellung des Bewegungsplans verstrichen ist, oder wenn die Route des Bewegungsplans, der durch das erste wiederaufladbare Fahrzeug ausgeführt wird, geändert wird.

7. Der zentrale Verwaltungsserver gemäß einem der Ansprüche 1 bis 6, wobei
die Bewegungsplan-Erstellungseinheit (404) konfiguriert ist, um den Bewegungsplan auf der Grundlage der Karteninformation und der Anlageninformation zu erstellen; wobei der Bewegungsplan umfasst::
eine sich Bewegungsroute zwischen einem Abfahrtspunkt oder der aktuellen Position und der ersten Versorgungsvorrichtung auf der Route; oder
eine Bewegungsroute zwischen dem Ziel und der letzten Versorgungsvorrichtung auf der Route.

8. Der zentrale Verwaltungsserver gemäß einem der Ansprüche 1 bis 7, wobei
die Bewegungsplan-Erstellungseinheit (404) konfiguriert ist, um den Bewegungsplan zu erstellen, der als Versorgungsdetails, die die Versorgungsvorrichtung auf der Route erhält, mindestens eines von enthält:
Information, die das zweite wiederaufladbare Fahrzeug oder das auf der Strecke verwendete Ladegerät angeben;
einen Verwendungs-Start-Zeitpunkt;
einen Verwendungs-End-Zeitpunkt;
Information, die einen Fahrpreis der Versorgungsvorrichtung auf der Strecke angeben; und
Information, die auf eine Wartezeit der auf der Route genutzten Versorgungsvorrichtung hinweisen.

9. Der zentrale Verwaltungsserver nach Anspruch 6, wobei die Bewegungsplan-Erstellungseinheit (404) konfiguriert ist, um:
den neuen Bewegungsplan mit einem aktuellen Bewegungsplan zu vergleichen, der vor dem neuen Bewegungsplan erstellt wurde und gegenwärtig vom ersten wiederaufladbaren Fahrzeug durchgeführt wird; und
festzustellen, dass der neue Bewegungsplan in einem Fall vorteilhaft ist, in dem der neue Bewegungsplan mindestens eine der folgenden Bedingungen erfüllt: kürzeste Zeit, minimale Entfernung, minimale Kosten, minimale Anzahl von Durchgangsstellen.

10. Der zentrale Verwaltungsserver gemäß einem der Ansprüche 1 bis 9, wobei
die Bewegungsplan-Erstellungseinheit (404) eine Prioritätsbedingung hat, die eine Priorität in Bezug auf mindestens einen der Faktoren: Fahrpreis, Reisezeit und Reisedistanz angibt, und
die Bewegungsplan-Erstellungseinheit (404) konfiguriert ist, um einen optimalen Bewegungsplan, der die Prioritätsbedingung erfüllt, aus einer Vielzahl von Bewegungsplänen auf der Grundlage der festgelegten Prioritätsbedingung auszuwählen.

11. Ein Routensuchverfahren für ein erstes wiederaufladbares Fahrzeug, wobei das Verfahren umfasst:
einen Erfassungsschritt des Erfassens von Anlageninformation bezüglich eines Nutzungszustands und eines Reservierungszustands einer Versorgungsvorrichtung, die eine Fahrzeugversorgungsvorrichtung, die ein zweites wiederaufladbares Fahrzeug versorgt, und eine Ladevorrichtung, die mit einem Ladegerät versehen ist, an dem eine Batterie des ersten und zweiten wiederaufladbaren Fahrzeugs mit Strom versorgt wird, umfasst; und
einen Bewegungsplan-Erstellungsschritt, der auf der Grundlage von Karteninformationen und Anlageninformation eine Route zu einem Ausstiegspunkt des ersten oder zweiten wiederaufladbaren Fahrzeugs über ein Ziel und die der Versorgungsvorrichtung auf der Route erhaltenen Versorgungsdetails enthält, wobei die Route die zu verwendende Versorgungsvorrichtung einschließt,
wobei die Ausstiegsstelle eine weitere Fahrzeugversorgungsvorrichtung ist; wobei die Anlageninformation Information über den Nutzungszustand Information umfasst, die die Verfügbarkeit des zweiten wiederaufladbaren Fahrzeugs und des Ladegeräts zum gegenwärtigen Zeitpunkt angeben,
die Anlageninformation Information bezüglich des Reservierungszustand umfasst, die eine Reservierungszeit angibt, zu der das zweite wiederaufladbare Fahrzeug und das Ladegerät für die Benutzung reserviert sind, und
im Bewegungsplan-Erstellungsschritt der Bewegungsplan auf der Grundlage der Anlageninformation erstellt wird, wobei der Bewegungsplan als Versorgungsvorrichtung, die auf der Route verwendet wird, mindestens eine enthält von:
der Fahrzeugversorgungsvorrichtung, die das zweite wiederaufladbare Fahrzeug bereit stellt, das den Ladezustand hat, der es erlaubt, zur nächsten Versorgungsvorrichtung zu fahren; und
Ladegeräts, das vom ersten wiederaufladbaren Fahrzeug bei der Ankunft benutzt werden kann.

12. Ein Programm, das einen Computer veranlasst, das Routensuchverfahren nach Anspruch 11 auszuführen.

## Revendications

1. Serveur de gestion centrale qui sert de dispositif de recherche d'itinéraire pour un premier véhicule rechargeable, comprenant :
une unité de communication (401) configurée pour recevoir des informations en provenance d'un serveur de gestion de groupes de voitures électriques (11, 12, ...) d'une installation de fourniture de véhicule pour fournir un deuxième véhicule rechargeable, un serveur de gestion de bornes de chargement (21, 22, 23, ...) d'une installation de chargement qui est dotée d'un chargeur au niveau duquel une énergie peut être fournie à une batterie des premier et deuxième véhicules rechargeables, et une unité embarquée (31, 32, 33, ...) des premier et deuxième véhicules rechargeables ;
une unité de création de tables dynamiques (402) configurée pour créer des informations d'installation comportant des informations concernant un état d'utilisation et à un état de réservation d'une installation de fourniture comportant l'installation de fourniture de véhicule, et l'installation de chargement, et des informations concernant un état de charge du deuxième véhicule rechargeable, sur la base des informations reçues par l'unité de communication (401) ; et
une unité de création de plan de déplacement (404) configurée pour créer un plan de déplacement comportant, sur la base d'informations de carte et des informations d'installation, un itinéraire jusqu'à un point de débarquement du premier ou du deuxième véhicule rechargeable via une destination, et de détails de fourniture reçus par l'installation de fourniture sur l'itinéraire, l'itinéraire comportant l'installation de fourniture à utiliser ; dans lequel le point de débarquement est une installation de fourniture de véhicule supplémentaire ;
les informations d'installation concernant l'état d'utilisation comportent des informations indiquant la disponibilité du deuxième véhicule rechargeable et du chargeur à l'heure actuelle,
les informations d'installation concernant l'état de réservation comportent des informations indiquant une heure de réservation lorsque le deuxième véhicule rechargeable et le chargeur sont réservés pour être utilisés, et
l'unité de création de plan de déplacement (404) est configurée pour créer le plan de déplacement sur la base des informations d'installation, le plan de déplacement comportant, en tant qu'installation de fourniture utilisée sur l'itinéraire, au moins l'une parmi :
l'installation de fourniture de véhicule garantissant le deuxième véhicule rechargeable qui a l'état de charge permettant de parcourir un trajet jusqu'à la prochaine installation de fourniture ; et
l'installation de chargement comportant le chargeur disponible qui est utilisable par le premier véhicule rechargeable au moment de l'arrivée.

2. Serveur de gestion centrale selon la revendication 1, dans lequel
l'unité de création de plan de déplacement (404) est configurée pour créer le plan de déplacement qui comporte, en tant qu'installation de fourniture utilisée sur l'itinéraire, au moins l'une parmi :
une installation de fourniture de véhicule de transfert au niveau de laquelle le premier véhicule rechargeable qui a parcouru un trajet peut être remplacé par le deuxième véhicule rechargeable ; et
l'installation de chargement qui peut fournir une énergie au premier véhicule rechargeable qui a parcouru un trajet.

3. Serveur de gestion centrale selon l'une quelconque des revendications 1 ou 2, comprenant en outre :
une unité de stockage (406) configurée pour stocker les informations d'installation ; et
une unité de mise à jour de tables dynamiques (403) configurée pour mettre à jour les informations d'installation dans l'unité de stockage (406) sur la base de détails du plan de déplacement, et pour mettre à jour les informations d'installation dans l'unité de stockage (406) sur la base d'informations indiquant un état de charge du deuxième véhicule rechargeable reçues par l'unité de communication (401).

4. Serveur de gestion centrale selon l'une quelconque des revendications 1 à 3, dans lequel
les informations d'installation comportent les informations reçues par l'unité de communication (401), les informations comportant au moins l'une parmi :
des informations indiquant le deuxième véhicule rechargeable garanti par l'installation de fourniture de véhicule ;
des informations indiquant un état de charge du deuxième véhicule rechargeable ;
des informations indiquant un état de réservation du deuxième véhicule rechargeable ;
des informations indiquant un état de réservation d'un chargeur prévu dans l'installation de chargement ;
des informations utilisées pour calculer un prix du deuxième véhicule rechargeable ou de l'installation de chargement ; et
des informations utilisées pour calculer un temps d'attente dans l'installation de fourniture de véhicule ou l'installation de chargement.

5. Serveur de gestion centrale selon l'une quelconque des revendications 1 à 4, dans lequel
l'unité de communication (401) est configurée pour recevoir des informations de position indiquant une position actuelle du premier véhicule rechargeable,
l'unité de création de plan de déplacement (404) est configurée pour créer le plan de déplacement comportant un itinéraire à partir de la position actuelle jusqu'à la destination, sur la base des informations de position reçues par l'unité de communication (401), des informations de carte et des informations d'installation, et
l'itinéraire comporte l'installation de fourniture à utiliser.

6. Serveur de gestion centrale selon l'une quelconque des revendications 1 à 5, dans lequel
l'unité de création de plan de déplacement (404) est configurée pour créer un nouveau plan de déplacement lorsqu'elle acquiert de nouvelles informations d'installation, un cas où un temps prédéterminé s'écoule à partir du moment où le plan de déplacement a été créé la fois précédente, ou un cas où l'itinéraire du plan de déplacement est réalisé par le premier véhicule rechargeable est modifié.

7. Serveur de gestion centrale selon l'une quelconque des revendications 1 à 6, dans lequel
l'unité de création de plan de déplacement (404) est configurée pour créer le plan de déplacement sur la base des informations de carte et des informations d'installation, le plan de déplacement comportant :
un itinéraire de déplacement entre un point de départ ou la position actuelle et la première installation de fourniture sur l'itinéraire ; ou
un itinéraire de déplacement entre la destination et la dernière installation de fourniture sur la route.

8. Serveur de gestion centrale selon l'une quelconque des revendications 1 à 7, dans lequel
l'unité de création de plan de déplacement (404) est configurée pour créer le plan de déplacement qui comporte, en tant que détails de fourniture reçus par l'installation de fourniture sur l'itinéraire, au moins l'une parmi :
des informations indiquant le deuxième véhicule rechargeable ou le chargeur utilisé sur l'itinéraire ;
une heure de début d'utilisation ;
une heure de fin d'utilisation ;
des informations indiquant un prix de l'installation de fourniture sur l'itinéraire ; et
des informations indiquant un temps d'attente de l'installation de fourniture utilisée sur l'itinéraire.

9. Serveur de gestion centrale selon la revendication 6, dans lequel
l'unité de création de plan de déplacement (404) est configurée pour :
comparer le nouveau plan de déplacement avec un plan de déplacement actuel qui est créé avant le nouveau plan de déplacement et réalisé actuellement par le premier véhicule rechargeable ; et
déterminer que le nouveau plan de déplacement est avantageux dans un cas où le nouveau plan de déplacement a au moins l'un parmi le temps le plus court, la distance minimale, le coût minimal le nombre minimal d'étapes.

10. Serveur de gestion centrale selon l'une quelconque des revendications 1 à 9, dans lequel
l'unité de création de déplacement (404) a une condition de priorité indiquant une priorité concernant au moins l'un parmi un prix, un temps de parcours et une distance de parcours, et
l'unité de création de plan de déplacement (404) est configurée pour sélectionner un plan de déplacement optimal remplissant la condition de priorité parmi une pluralité de plans de déplacement, sur la base de la condition de priorité établie.

11. Procédé de recherche d'itinéraire pour un premier véhicule rechargeable, le procédé comprenant :
une étape d'acquisition pour acquérir des informations d'installation concernant un état d'utilisation et à un état de réservation d'une installation de fourniture qui comporte une installation de fourniture de véhicule qui fournit un deuxième véhicule rechargeable et une installation de chargement qui est dotée d'un chargeur au niveau duquel une énergie est fournie à une batterie des premier et deuxième véhicules rechargeables ; et
une étape de création de plan de déplacement pour créer un plan de déplacement comportant, sur la base d'informations de carte et des informations d'installation, un itinéraire jusqu'à un point de débarquement du premier ou du deuxième véhicule rechargeable via une destination et des détails de fourniture reçus par l'installation de fourniture sur l'itinéraire, l'itinéraire comportant l'installation de fourniture à utiliser,
le point de débarquement étant une installation de fourniture de véhicule supplémentaire ; dans lequel
les informations d'installation concernant l'état d'utilisation comportent des informations indiquant la disponibilité du deuxième véhicule rechargeable et du chargeur à l'heure actuelle,
les informations d'installation concernant l'état de réservation comportent des informations indiquant une heure de réservation lorsque le deuxième véhicule rechargeable et le chargeur sont réservés pour être utilisés, et
lors de l'étape de création de plan de déplacement, le plan de déplacement est créé sur la base des informations d'installation, le plan de déplacement comportant, en tant qu'installation de fourniture utilisée sur l'itinéraire, au moins l'une parmi :
l'installation de fourniture de véhicule garantissant le deuxième véhicule rechargeable qui a l'état de charge permettant de parcourir un trajet jusqu'à la prochaine installation de fourniture ; et
l'installation de chargement comportant le chargeur disponible qui est utilisable par le premier véhicule rechargeable au moment de l'arrivée.

12. Programme pour amener un ordinateur à exécuter le procédé de recherche d'itinéraire selon la revendication 11.
